# EUROPÄISCHE PATENTANMELDUNG

(11) **EP 3 718 934 A1**
(43) Veröffentlichungstag der Anmeldung: **07.10.2020**
(21) Anmeldenummer: 20152354.5
(22) Anmeldetag: 17.01.2020
(51) Int. Cl.: B65G 63/04, B65G 65/00

(54) **LADEBRÜCKE UND VERFAHREN ZUM UMLADEN EINER LADUNG ZWISCHEN ZWEI VONEINANDER BEABSTANDETEN DEPOTS**

(30) Priorität: 18.01.2019 DE 102019101310
(71) Anmelder: Klasen, Andreas, 56154 Boppard (DE)
(72) Erfinder: Klasen, Andreas, 56154 Boppard (DE)
(74) Vertreter: Macliing, Trixia

(57) **Zusammenfassung**

[Die Erfindung betrifft eine Ladebrücke (100) zum Umladen einer Ladung zwischen zwei voneinander beabstandeten Depots mit einem Hauptrahmen (110) und einer Anzahl von parallel zu einer horizontalen Längsachse (LA) der Ladebrücke (100) angeordneten und von dem Hauptrahmen (110) getragenen Ladezinken (121, 122, 123, 124, 125, 126) zur Aufnahme der Ladung. Die Ladebrücke (100) umfasst zumindest ein Verschiebesystem (140) zumindest zur Verschiebung der Ladezinken (121, 122, 123, 124, 125, 126) entlang der Längsachse (LA) an einer Beladeseite (101) und an einer der Beladeseite (101) gegenüberliegenden Entladeseite (102) der Ladebrücke (100) über die Ladebrücke (110) hinaus und ein den Hauptrahmen (110) tragendes Fahrsystem (130) mit einer Anzahl von Fahrwerken (131) zum Verfahren der Ladebrücke (100) zumindest entlang der Längsachse (LA) und entlang einer zur Längsachse (LA) senkrechten, horizontalen Querachse (QA). Das Verschiebesystem (140) umfasst zumindest eine Zinkenhubvorrichtung (129) zur Verschiebung zumindest eines der Ladezinken (121, 122, 123, 124, 125, 126) entlang einer vertikalen Hubachse (HA) relativ zu dem Hauptrahmen (110). Die Erfindung betrifft außerdem ein Verfahren zum Umladen einer Ladung zwischen zwei voneinander beabstandeten Depots mit der Ladebrücke (100).]

## Beschreibung

### [Technisches Gebiet

Die Erfindung betrifft eine Ladebrücke zum Umladen einer Ladung zwischen zwei voneinander beabstandeten Depots mit einem Hauptrahmen, die Ladebrücke umfassend eine Anzahl von parallel zu einer horizontalen Längsachse der Ladebrücke angeordneten und von dem Hauptrahmen getragenen Ladezinken zur Aufnahme der Ladung und zumindest ein Verschiebesystem zumindest zur Verschiebung der Ladezinken entlang der Längsachse an einer Beladeseite und an einer der Beladeseite gegenüberliegenden Entladeseite der Ladebrücke über die Ladebrücke hinaus, wobei das Verschiebesystem zumindest eine Zinkenhubvorrichtung zur Verschiebung zumindest eines der Ladezinken entlang einer vertikalen Hubachse relativ zu dem Hauptrahmen umfasst.

Die Erfindung betrifft ferner ein Verfahren zum Umladen einer Ladung zwischen zwei voneinander beabstandeten Depots mit zumindest einer Ladebrücke.

### Stand der Technik

Aus dem Stand der Technik sind Ladebrücken zur Verbindung zweier voneinander beabstandeter Depots, beispielsweise einer Laderampe und eines LKW, bekannt, durch die Abstände zwischen Laderampen und Ladeflächen von Fahrzeugen überbrückt und Höhenunterschiede ausgeglichen werden können, sodass eine Ladung über die Ladebrücke, beispielsweise mit Hilfe von Hubwagen oder Gabelstaplern, zwischen den beiden Depots umgeladen werden kann.

Die meisten modernen Lagerhallen verfügen über Verladetore mit fest installierten Ladebrücken. Bei dieser Form der Laderampe fährt der LKW rückwärts an das Verladetor heran, sodass die Ladung dann auf einem möglichst kurzen Weg zwischen dem LKW und der Lagerhalle umgeladen werden kann. Im Wesentlichen bestehen fest installierte Ladebrücken (handbetätigt oder kraftbetrieben) aus zwei Bauteilen: Der Plattform und dem Keil oder Vorschub. In der Norm DIN EN 1398 sind die Anforderungen, die erfüllt werden müssen, detailliert beschrieben. Unter anderem wird die Traglast mit mindestens 60 kN angegeben. Aufgrund von Verrutschungsgefahr von Ladung auf den Ladebrücken darf gemäß den berufsgenossenschaftlichen Vorschriften die Neigung bei Ladebrücken 12,5% bzw. 7° nicht überschreiten.

Bei Klappkeil-Ladebrücken ist der Überladekeil an der Rampenkante durch Scharniere mit der Plattform verbunden. In der Ruhestellung ist der Keil heruntergeklappt. Nachdem ein Fahrzeug an die Rampe gefahren ist, wird die Plattform in die höchste Stellung gebracht und der Keil auf eine Linie mit der Plattformoberfläche ausgeklappt. Nun wird die Plattform mit dem arretierten Keil abgesenkt und liegt auf der Ladefläche des Fahrzeugs auf. Bei Vorschub-Ladebrücken ist der Keil in der Ruhestellung parallel zur Plattformoberfläche unter dieser eingezogen. Der Vorschub kann bei diesen Brücken in der Länge individuell an die Erfordernisse angepasst werden, da der Keil nicht immer voll ausgefahren werden muss.

Da mit fest installierten Ladebrücken deutlich größere Höhenunterschiede überbrückt werden können als mit einer ortsveränderlichen Ladebrücke in Form eines Ladeblechs, das manuell über einen Zwischenraum zwischen einem Fahrzeug und einer Laderampe gelegt werden kann, eignen sich fest installierte Ladebrücken für eine Vielzahl verschiedener LKW. Ein Ladeblech hat ferner den Nachteil, dass es gegen ein Verschieben beim Begehen und Befahren gesichert sein muss. Dies geschieht meist durch eine Anbringung von zwei Winkelprofilen an der Unterseite in Querrichtung, die das Verschieben in beide Richtungen verhindern, oder durch Haken oder Stifte, mit denen Ladebrücke und LKW fest verbunden werden.

Die Druckschrift DE 17 81 248 A beschreibt beispielsweise eine ortsveränderliche Ladebrücke. Die Druckschrift WO 97 / 29 034 A1 beschreibt beispielsweise eine fest installierte Ladebrücke.

Bei Unternehmen mit vielen Laderampen für die Be- und Entladung kommt es häufig zu langen Wartezeiten, weil die Ladung der Fahrzeuge zeitaufwändig, beispielsweise mit Gabelstaplern oder Hubwagen, umgeladen wird. Dadurch, dass die Fahrzeuge und Fahrer während der Standzeiten der Fahrzeuge beim Umladen oder beim Warten darauf keine Ladung zu ihrem Bestimmungsort transportieren können, entstehen hohe Kosten. Daher setzen viele Unternehmen ein IT-gestütztes Laderampen- oder Zeitfenstermanagement ein, um die Be- und Entladungen zu koordinieren.

Für einen sicheren Umladevorgang ist es notwendig, dass eine Ladebrücke sowohl an der Laderampe als auch an dem Fahrzeug gegen ein Verrutschen oder Abrutschen gesichert ist. Während die Sicherung an der Laderampe bei einer fest installierten Ladebrücke in der Regel gegeben ist, kann eine zuverlässige Sicherung an dem Fahrzeug einen hohen Bedienaufwand oder aufwändige technische Lösungen erfordern. Die Anmeldung EP 0 387 190 A1 beschreibt zur Lösung dieses Problems eine Überfahrbrücke mit selbsttätiger Abrutschsicherung. Durch die selbsttätige Abrutschsicherung kann das Verbinden eines Fahrzeugs über die Ladebrücke mit der Laderampe beschleunigt werden, der sich daran anschließende Umladevorgang der Ladung bleibt jedoch zeitintensiv.

Die Anmeldung DE 295 17 974 U1 beschreibt eine gattungsgemäße kippbare Ladebrücke, bei der zum schnelleren Be- und Entladen eines Fahrzeuges Führungsschienen aus mehreren gegeneinander verschwenkbaren Führungsschienensegmenten von der Ladebrücke auf die Ladefläche des Fahrzeugs geschoben werden, an denen Ladeförderer jeweils drei nebeneinanderliegende Paletten auf die oder von der Ladefläche transportieren können. DE 295 17 974 U1 offenbart keine Möglichkeit unterschiedliche Palettengrößen oder Palettenanordnungen zu transportieren. Nachteilig an der Ladebrücke ist ferner, dass sie technisch wesentlich aufwändiger ist als vorbekannte Ladebrücken, sodass ihr Einsatz, insbesondere an einer Lagerhalle mit vielen bestehenden Ladebrücken, die ersetzt werden müssten, einen hohen Investitionsaufwand erfordert. Durch diese Beschränkungen ist die Verwendung der Ladebrücke, insbesondere für wechselnde Umladeaufgaben, relativ zeitaufwändig und teuer.

Die Druckschrift DE 10 2015 006 224 A1 beschriebt eine Güterumschlagvorrichtung zur horizontalen Querverladung zwischen Straße und Schiene mit mehreren quer zu einer Gleisanlage verfahrbaren Shuttlebalken. Die Shuttlebalken sind zum Umladen von Gütern jeweils auf Förderbahnen horizontal entlang einer Balkenlängsrichtung verfahrbar. Durch eine ortsfeste Installation der Förderbahnen neben der Gleisanlage bietet die Güterumschlagvorrichtung nur begrenzte Einsatzmöglichkeiten.

Die Druckschrift DE 31 09 793 A1 beschreibt einen Ladeapparat mit einer Anzahl von durch ein Traggerüst verbundenen und in einer Container Einfahrbaren Hubbalken zum Be- und Entladen des Containers. DE 31 09 793 A1 offenbart keine Möglichkeit, wie mit dem Ladeapparat aus einem Container entnommene Ladung effizient weiter transportiert werden kann.

### Technische Aufgabe

Die Aufgabe der Erfindung ist es daher, eine möglichst kostengünstige und zuverlässige Ladebrücke und ein möglichst einfach umzusetzendes und zuverlässiges Verfahren zu schaffen, mit denen Ladung effizienter zwischen zwei voneinander beabstandeten Depots umgeladen werden kann. Ferner sollen sich die Ladebrücke und das Verfahren möglichst einfach mit bestehenden Logistiksystemen und Logistikverfahren kombinieren lassen.

### Technische Lösung

Der Gegenstand der vorliegenden Erfindung stellt eine Ladebrücke bereit, die die technische Aufgabe entsprechend den Merkmalen des Anspruches 1 löst. Ebenso wird die Aufgabe durch ein Verfahren gemäß Anspruch 12 gelöst. Vorteilhafte Ausgestaltungen ergeben sich aus den abhängigen Ansprüchen.

### Beschreibung der Ausführungsarten

Eine erfindungsgemäße Ladebrücke zum Umladen einer Ladung zwischen zwei voneinander beabstandeten Depots, beispielsweise zwischen einer Laderampe, insbesondere mit einem Palettenfördersystem, und einem LKW, einem Wechselaufbau oder einem Container, umfasst zumindest einen Hauptrahmen und eine Anzahl von parallel zu einer horizontalen Längsachse der Ladebrücke angeordneten und von dem Hauptrahmen getragenen Ladezinken, beispielsweise aus Stahl, zur Aufnahme der Ladung. Die Ladebrücke kann für einen Einsatz im Innenbereich und/oder im Außenbereich beispielsweise einer Lagerhalle ausgelegt sein.

Ein LKW im Sinne der Erfindung ist beispielsweise ein Sattelzug, ein Motorwagen mit festem Aufbau oder Wechselaufbau, ein Gliederzug oder ein EuroCombi (auch Megaliner oder Gigaliner genannt).

Der Hauptrahmen kann im Wesentlichen rechteckig sein, um eine möglichst platzsparende Beladung mit quaderförmigen Ladungseinheiten, insbesondere Paletten, zu erlauben. Je nach Anforderungen des Einsatzortes oder der Ladung kann der Hauptrahmen auch anders geformt sein.

Der Hauptrahmen kann eine Anzahl von, insbesondere zwei, parallel zur Längsachse angeordneten Längsträgern und eine Anzahl von, insbesondere zumindest zwei, parallel zu einer zur Längsachse senkrechten, horizontalen Querachse der Ladebrücke angeordneten Querträgern umfassen. Die Längsträger und/oder Querträger können beispielsweise aus Stahl, insbesondere aus Feinkornbaustahl, bestehen und/oder als Doppel-T-Träger ausgestaltet sein. Die Querträger können beispielsweise mit den Längsträgern, beispielsweise über jeweils eine Stirnplatte, verschweißt und/oder verschraubt sein.

Die Ladezinken können zum Beispiel jeweils ein, insbesondere nach unten offenes, U-Profil umfassen, das insbesondere aus Stahl bestehen, eine Breite entlang der Querachse von 10 cm bis 20 cm, insbesondere von 15 cm bis 17 cm, beispielsweise von 16 cm, und/oder einer Länge entlang der Längsachse von 5 m bis 20 m, beispielsweise von 10 m bis 18 m, insbesondere von 15 m, haben kann. Die beiden Enden an der Beladeseite und der Entladeseite sind beispielsweise horizontal und/oder vertikal angewinkelt, so dass beim Ausfahren der Ladezinken ein einfaches Einführen in Aufnahmeöffnungen der Ladung, insbesondere von Paletten, gewährleistet ist.

Die Ladebrücke umfasst erfindungsgemäß zumindest ein Verschiebesystem zumindest zur Verschiebung der Ladezinken entlang der Längsachse an einer Beladeseite und an einer der Beladeseite gegenüberliegenden Entladeseite der Ladebrücke über die Ladebrücke hinaus. Eine Verschiebung im Sinne der Erfindung ist eine Bewegung der Ladezinken entlang zumindest einer Raumachse, bei der die Parallelität der Ladezinken zueinander erhalten bleibt.

Das Verschiebesystem erlaubt es der Ladebrücke, die Ladung an der Beladeseite aufzunehmen und an der gegenüberliegenden Entladeseite weiterzugeben oder umgekehrt. Dadurch kann die Ladung, wenn sich jeweils eines der beiden Depots an der Beladeseite und der Entladeseite der Ladebrücke befindet, besonders schnell und effizient zwischen den beiden Depots umgeladen werden.

Das Verschiebesystem kann zur gemeinsamen Verschiebung mehrerer, insbesondere aller, Ladezinken ausgelegt sein. Dabei ist vorgesehen, dass der Relativabstand von Ladezinken untereinander bezüglich zumindest einer Raumachse konstant gehalten oder verändert werden kann. Beispielsweise kann der Relativabstand vor dem Aufnehmen einer Ladung während der Verschiebung auf diese Ladung eingestellt werden, um Zeit zu sparen. Wenn die Ladezinken mit der Ladung beladen verschoben werden, wird ihr Relativabstand vorzugsweise konstant gehalten, um einen sicheren Ladungstransport zu gewährleisten.

Wenn das Verschiebesystem zur gemeinsamen Verschiebung mehrerer Ladezinken ausgelegt ist, kann das Verschiebesystem besonders einfach aufgebaut sein. Das Verschiebesystem kann dazu ausgelegt sein, einzelne Ladezinken oder Gruppen von Ladezinken individuell zu verschieben, sodass die Ladebrücke besonders vielseitig eingesetzt werden kann, beispielsweise für unterschiedliche Arten von Ladung. So können beispielsweise durch ein Ausfahren von unterschiedlichen Ladezinken und/oder einer unterschiedlichen Anzahl von Ladezinken unterschiedlich große Ladung, unterschiedlich geformte Ladung oder eine unterschiedliche Anzahl von Ladungseinheiten, insbesondere Paletten, aufgenommen werden.

Das Verschiebesystem kann zum Beispiel zumindest einen, beispielsweise mit einem hydrostatischen Antrieb und/oder einem Gleichstrommotor oder Wechselstrommotor, insbesondere über ein Getriebe, angetriebenen, Kettenantrieb zur Verschiebung zumindest eines der Ladezinken oder einer Gruppe von Ladezinken umfassen. Ein Kettenantrieb bietet den Vorteil einer besonders hohen Zuverlässigkeit, insbesondere bei hoher mechanischer Belastung, beispielsweise wenn die Ladezinken mit einer kompletten Ladung eines Sattelzugs beladen sind.

Die Ladebrücke kann ein den Hauptrahmen tragendes Fahrsystem zum Verfahren der Ladebrücke, insbesondere der Ladebrücke als Ganzes mit der Ladung in zumindest einer im Wesentlichen horizontalen Richtung, umfassen. Dadurch kann die Ladebrücke die Ladung auch dann zwischen den beiden Depots umladen, wenn diese nicht direkt an der Beladeseite und der Entladeseite der Ladebrücke angeordnet sind. Wenn beispielsweise wie im Stand der Technik üblich eines der Depots ein Transportfahrzeug und das andere Depot eine Lagerfläche ist, ist es zum Umladen nicht notwendig, das Transportfahrzeug durch zeitaufwändiges Rangieren in eine vorgegebene Position zu der Lagerfläche zu bringen. Stattdessen kann die Ladebrücke an das Transportfahrzeug heranfahren, um die Ladung aufzunehmen, und dann mit der Ladung zu der Lagerfläche fahren. Da die Ladebrücke im Gegensatz zu dem Transportfahrzeug nicht für einen Langstreckentransport ausgelegt sein muss, kann sie wesentlich manövrierfähiger ausgestaltet sein als das Transportfahrzeug. Dadurch kann die Ladebrücke wesentlich einfacher und schneller an die Lagerfläche fahren als das Transportfahrzeug. Das Fahrsystem führt somit zu einem wesentlich zeiteffizienteren Umladen.

Ein "Transportfahrzeug" im Sinne der Erfindung kann beispielsweise ein Lastkraftwagen, ein Sattelzug oder ein Gliederzug sein. Eine "Lagerfläche" im Sinne der Erfindung kann beispielsweise eine offene oder überdachte Lagerfläche, eine Laderampe oder eine Lagerhalle sein.

Die Ladezinken können, insbesondere bezüglich ihrer Tragfähigkeit, zur gleichzeitigen Aufnahme einer Mehrzahl von standardisierten Paletten, bevorzugt Europoolpaletten, Eurogitterboxpaletten, Luftfracht-Paletten (Unit Load Devices) und/oder Containerpaletten, ausgelegt sein, wobei insbesondere auch mehrere Paletten vertikal übereinandergestapelt sein können. Dabei kann insbesondere eine Mehrzahl von Paletten senkrecht zu der Längsachse nebeneinander und/oder entlang der Längsachse hintereinander angeordnet sein. Beispielsweise kann die Ladung zumindest zwei oder drei nebeneinander und/oder zumindest zwei, drei, vier oder mehr hintereinander angeordnete Paletten umfassen. Vorzugsweise sind die Ladezinken zur gleichzeitigen Aufnahme von drei nebeneinander und elf hintereinander und längs zur Längsachse angeordneten Europoolpaletten und/oder zwei nebeneinander und 17 hintereinander und quer zur Längsachse angeordneten Europoolpaletten ausgelegt. Daraus ergibt sich der besondere Vorteil, dass die Ladezinken eine vollständige Beladung eines Standard-Sattelaufliegers gleichzeitig aufnehmen können, sodass der Sattelauflieger besonders schnell beladen oder entladen werden kann.

Eine Europoolpalette ist eine nach EN 13698-1 genormte Transportpalette mit einer Länge von 1200 mm, einer Breite von 800 mm und einer Höhe von 144 mm und dient der optimalen Raumausnutzung im Transportwesen. Eine Eurogitterboxpalette ist eine von der EPAL genormte Stahlrahmen-Gitterkonstruktion. Die Außenmaße betragen in der Breite 835 mm, in der Länge 1240 mm und in der Höhe 970 mm. Eine Containerpalette ist eine Transportpalette mit den für ISO-Container optimierten Maßen von 1140 mm Länge und 760 mm Breite.

Die Ladebrücke, insbesondere die Ausgestaltung der Ladezinken und/oder die Tragfähigkeit der Ladebrücke, kann auch zur Aufnahme anderer, insbesondere im außereuropäischen Transportwesen üblicher, Paletten ausgelegt sein. Dadurch, dass die Ladezinken eine Mehrzahl von Paletten gleichzeitig aufnehmen können, wird ein besonders schnelles Umladen ermöglicht.

Im Folgenden wird die Erfindung zur besseren Verständlichkeit exemplarisch mit Bezug auf Europoolpaletten beschrieben. Dabei sind die Europoolpaletten beispielhaft für beliebige, beispielsweise bezüglich der Maße, Anzahl der Aussparungen für Ladezinken, Ladelast und/oder Ladefläche, standardisierte Paletten zu verstehen. Eine Übertragung auf andere standardisierte Paletten ist von der vorliegenden Erfindung umfasst.

Durch entsprechend angepasste Transportgestelle oder Ladeplattformen kann mit den Ladezinken auch Ladung aufgenommen werden, die sich nicht auf standardisierten Paletten transportieren lässt. Beispielsweise mit einem Transportgestell mit vertikalen Stützrohren an den zur Längsachse parallelen Längsseiten der Ladebrücke und Längsverbindungen und Querverbindungen der Stützrohre ist es möglich, Profile, Rohre und/oder Balken von einer Länge bis zur Gesamtlänge der Ladebrücke entlang der Längsachse, beispielsweise von bis zu 15 m Länge, sicher und effizient umzuladen.

Eine Ladeplattform kann zum Beispiel eine Anzahl von Kanthölzern umfassen, die parallel zur Längsachse verlegt sind und deren horizontaler Abstand zueinander senkrecht zur Längsachse zumindest einer Breite der Ladezinken in dieser Richtung entspricht. Die Ladeplattform kann beispielsweise mit geeigneten Leimbinderplatten verschalt sein, sodass es zum Beispiel möglich ist, die komplette Ladeplattform mit der Ladebrücke einem Sattelauflieger zu entnehmen, um diese außerhalb des Sattelaufliegers beispielsweise mit einem geeigneten Kran zu entladen oder zu bestücken. Indem die komplette Ladeplattform auf einmal entnommen wird, entfällt insbesondere ein bei üblichen Entlademethoden oft notwendiges und zeitaufwändiges Ab- und Zuplanen des Sattelaufliegers.

Die Ladebrücke kann eine gerade Anzahl von, insbesondere sechs, Ladezinken umfassen. Bei einer geraden Anzahl von Ladezinken kann jede Palette von zumindest zwei Ladezinken unterstützt werden, sodass ein stabiler und sicherer Transport möglich ist. Im Laderaum eines Lastkraftwagens können bis zu drei längs oder parallel zur Fahrtrichtung ausgerichtete Europoolpaletten nebeneinander transportiert werden. Daher ist es besonders vorteilhaft, sechs Ladezinken vorzusehen, um drei nebeneinander angeordnete Europoolpaletten auf einmal sicher und zuverlässig umladen zu können.

Die Ladezinken können an der Beladeseite und der Entladeseite jeweils mindestens um das Sechsfache, besonders bevorzugt mindestens das Elffache, der Länge einer der Paletten über die Ladebrücke hinaus verschiebbar sein. Ein Gliederzug kann im Zugfahrzeug und im Anhänger jeweils bis zu sechs Europoolpaletten längs in Fahrtrichtung hintereinander angeordnet transportieren. Ein Sattelzug kann bis zu elf Europoolpaletten längs in Fahrtrichtung hintereinander angeordnet transportieren. Daher ist es besonders vorteilhaft, wenn die Ladezinken mindestens um das Sechsfache oder das Elffache der Länge eine Europoolpalette über die Ladebrücke hinaus verschiebbar sind, um sechs oder elf längs hintereinander angeordnete Europoolpaletten, also insbesondere die gesamte Ladung eines Zugfahrzeugs oder eines Anhängers eines Gliederzugs oder eines Sattelzugs, auf einmal sicher und zuverlässig umladen zu können.

Eine horizontale Breite zumindest eines der Ladezinken, insbesondere aller Ladezinken, senkrecht zur Längsachse kann kleiner als die Breite der stirnseitigen Aufnahmeöffnungen der Paletten sein, wobei insbesondere die Breite des zumindest einen Ladezinken kleiner als die Hälfte der Breite der längsseitigen Aufnahmeöffnungen der Paletten sein kann. Damit die Ladezinken zur sicheren Aufnahme der Paletten in deren Aufnahmeöffnungen eingeführt werden können, sind die Ladezinken vorteilhafterweise schmaler als die Aufnahmeöffnungen.

Wenn die Ladezinken schmaler als die Hälfte der Breite der längsseitigen Aufnahmeöffnungen sind, können jeweils zwei Ladezinken in eine Aufnahmeöffnung eingeführt werden. Eine Europoolpalette hat sowohl längsseitig als auch stirnseitig jeweils zwei Aufnahmeöffnungen. Wenn jeweils zwei Ladezinken in eine längsseitige Aufnahmeöffnung eingeführt werden können, können beispielsweise sechs Ladezinken zum einen dazu verwendet werden, drei längs nebeneinander angeordnete Europoolpaletten aufzunehmen, indem jeweils ein Ladezinken in eine stirnseitige Aufnahmeöffnung eingeführt wird. Zum anderen können die sechs Ladezinken auch dazu verwendet werden, zwei quer nebeneinander angeordnete Europoolpaletten aufzunehmen, indem in zwei längsseitige Aufnahmeöffnungen jeweils ein Ladezinken und in die beiden weiteren längsseitigen Aufnahmeöffnungen jeweils zwei Ladezinken eingeführt werden. Dadurch kann die Ladebrücke besonders vielseitig eingesetzt werden.

"Längs nebeneinander angeordnet" bedeutet im Sinne der Erfindung "mit ihrer Längsseite parallel zur Längsachse der Ladebrücke und senkrecht zur Längsachse der Ladebrücke nebeneinander angeordnet". "Quer nebeneinander angeordnet" bedeutet im Sinne der Erfindung "mit ihrer Stirnseite parallel zur Längsachse der Ladebrücke und senkrecht zur Längsachse der Ladebrücke nebeneinander angeordnet". Drei längs nebeneinander angeordnete Europoolpaletten oder zwei quer nebeneinander angeordnete Europoolpaletten entsprechen der Aufnahmefähigkeit von Standard-Sattelzügen und Standard-Gliederzügen.

Eine vertikale Höhe zumindest eines der Ladezinken, bevorzugt aller Ladezinken, senkrecht zur Längsachse kann kleiner als die Höhe der stirnseitigen Aufnahmeöffnungen und/oder der längsseitigen Aufnahmeöffnungen der Paletten sein. Damit die Ladezinken zur sicheren Aufnahme der Paletten in deren Aufnahmeöffnungen eingeführt werden können, sind die Ladezinken vorteilhafterweise weniger hoch als die Aufnahmeöffnungen.

Zumindest einer der Ladezinken, insbesondere jeder Ladezinken, kann entlang der Längsachse teleskopierbar sein. Dadurch kann der Ladezinken zum Verfahren und/oder Lagern der Ladebrücke auf eine geringere Länge eingestellt sein als zur Aufnahme von Ladung, sodass die Ladebrücke einfacher rangiert und/oder platzsparender gelagert werden kann.

Zumindest einer der Ladezinken, insbesondere jeder Ladezinken, kann eine Mehrzahl von entlang der Längsachse hintereinander angeordneten und durch Knickgelenke um eine horizontale Querachse drehbar miteinander verbundenen Sektionen umfassen, um eine Durchbiegung bei einem Längsverschieben des Ladezinkens, beispielsweise auf einen Trailerauflieger, zu ermöglichen.

Der Ladezinken kann beispielsweis drei Sektionen, zum Beispiel mit jeweils 5 m Länge entlang der Längsachse umfassen.

Beispielsweise eine entlang der Längsachse erste und/oder letzte Sektion kann jeweils einen Motor, insbesondere einen Gleichstrommotor, zur Längsverschiebung des jeweiligen Ladezinkens umfassen. Der Motor kann im Untergurt eines nach unten offenen U-förmigen Profils des Ladezinkens angebracht sein und beispielsweise mittels einer Kette, eines Kettenrads und/oder einer Kettenführung in einer geführten Schiene der Vertikalschenkel des Profils die Längsverschiebung des jeweiligen Ladezinkens ermöglichen, um insbesondere je nach Einfahrtiefe der Gabelzinken in einen Frachtraum bei homogener oder inhomogener Beladung eine Abstützvorrichtung des Ladezinkens zwischen den Feldern einer Querlattung aufzunehmender Paletten exakt zu positionieren.

Vorzugsweise wird der Ladezinken bei einer Längsverschiebung entlang der Längsachse nur durch den jeweils in Bewegungsrichtung vorderen Motor angetrieben, während der in Bewegungsrichtung hintere Motor inaktiv ist.

An der Unterseite des U-förmigen Profils kann ein, insbesondere horizontal und/oder parallel zur Längsachse angeordneter, Magnetdruckzylinder angeordnet sein, der beispielsweise mittels einer Hochdruckverbindungsleitung mit Hydraulikspeicher und T-Stückverbindungen Energie an einzelne Hydraulikzylinder der Zinkenhubvorrichtung überträgt. An den Knickgelenken kann jeweils eine flexible Verbindung der Hochdruckverbindungsleitung und/oder eine Steuerleitung verbaut sein.

Zumindest einer der Ladezinken, insbesondere jeder Ladezinken, kann eine Abstützvorrichtung zum Abstützen des Ladezinkens auf einer Ladefläche eines der Depots umfassen. Die Abstützvorrichtung verhindert, dass die Ladebrücke aus dem Gleichgewicht gerät, wenn der Ladezinken außerhalb des Hauptrahmens mit Ladung belastet wird.

Die Abstützvorrichtung kann eine Anzahl von Laufrädern und/oder Laufrollen umfassen, damit der Ladezinken reibungsarm über die Ladefläche und/oder den Hauptrahmen bewegt werden kann. Die Laufräder und/oder Laufrollen können beispielsweise in einer Trapezführung drehend geführt und gelagert sein. Die Hauptachse der Laufräder ist beispielsweise abgesetzt, so dass an der Beladeseite und der Entladeseite das Laufrad innen gelagert aufgesetzt und somit axial gesichert ist. Vorzugsweise umfasst die Abstützvorrichtung eine Mehrzahl von, insbesondere zwei, drei oder vier, Laufrädern und/oder Laufrollen, um eine gleichmäßige Belastung der Ladefläche zu erreichen.

Die Laufräder und/oder Laufrollen umfassen beispielsweise jeweils eine gelagerte Achse einschließlich Innenhülse mit einem, insbesondere bürstenfreien und/oder mit Gleichstrom betriebenen, Radnabenmotor und einen äußerem Laufring, welcher eine horizontale Längsverschiebung der Ladezinken ermöglicht.

Zur Energieversorgung des Radnabenmotors können an der Abstützvorrichtung und/oder dem zugehörigen Ladezinken mindestens zwei Schleifkontakte angebracht sein, die mit jeweils einer Stromschiene am Hauptrahmen der Ladebrücke verbunden sind. Ferner besteht die Möglichkeit, die elektrische Energie- und/oder Steuerimpulsübertragung durch berührungslose Induktionstechnik umzusetzen.

Die Laufräder und/oder Laufrollen sind beispielsweise an den beiden U-Schenkeln eines Ladezinkens mit nach unten offenem U-Förmigen Profil in einer beweglichen, insbesondere teleskopierbaren, Schwalbenschwanzführung geführt, um eine Vertikalverschiebung des Ladezinkens gegenüber den Laufrädern und/oder Laufrollen zu ermöglichen.

Die Laufräder und/oder Laufrollen sind vorzugsweise jeweils unterhalb eines Ladezinkens, insbesondere eines Ladezinkens mit nach unten offenem, U-förmigem Profil, angeordnet. Im Obergurt des Ladezinkens kann eine Aussparung vorgesehen sein, um einen Freilauf der Laufräder und/oder Laufrollen zu ermöglichen.

In den beiden oberen Winkeln des U-Profils können Versorgungsleitungen zur Energieübertragung und/oder Steuerleitungen integriert sein.

An den Außenschenkeln des U-Profils können jeweils ein Teil eines zweigeteiltem Elektromotors, insbesondere eines Gleichstrommotors, ein Kettenrad und eine Kettenführung angebracht sein. Diese dienen vorteilhafterweise dazu, dem Ladezinken bei einer Längsverschiebung entlang der Längsachse das Überfahren von Querlatten umzuladender Paletten zu ermöglichen.

Der zweigeteilte Elektromotor wird vorzugsweise über einen geeigneten Messsensor gesteuert und stellt die Spurparallelität der Ladezinken bei einer Längsverschiebung sicher. Der zweigeteilte Elektromotor kann die Kettenräder mit unterschiedlichen Drehmomente und/oder Drehzahlen antreiben, um die Ladezinken spurparallel zu verschieben.

Die Laufräder und/oder Laufrollen können als eine Anzahl von Doppellaufwerken angeordnet sein, wobei jeweils zwei Laufräder und/oder Laufrollen entlang der Längsachse voneinander beabstandet sind.

Die Achsen eines Doppellaufwerks sind vorzugsweise durch ein horizontales Verbindungsstück verbunden, das konvex ausgestaltet sein kann, um das Raumbaumaß zu optimieren. An dem Verbindungsstück kann eine Zinkenhubvorrichtung, beispielsweise mit einem symmetrisch einfachwirkenden Teleskopzylinder (hydraulisch und/oder magnetisch), für die vertikale Hubbewegung eines Ladezinken angeordnet sein. Die Zinkenhubvorrichtung umfasst beispielsweise mindestens zwei diagonal angeordnete Zugfedern zwischen dem Untergurt des Ladezinkens und dem Doppellaufwerk, um den Ladezinken in eine vertikale Ausgangsposition zu bringen.

Zentrisch zwischen zwei Laufrädern kann ein Zahnradsektor mit einer Laufbuchse, einem Lager und/oder einem Formblech mit einem Teleskopzylinder verbunden sein, so dass ein Vertikalhub des Ladezinkens und ein Vor- und Rücktrieb des Ladezinkens entlang der Längsachse möglich sind.

Eine Abstützvorrichtung kann einen Einzelmitnehmer, bestehend aus einem Zahnradsektor, einem Formblech, einem Teleskopzylinder und einer Vertikaltrapezführung umfassen.

Eine Kettenführung im Obergurt kann eine Kette zum Antrieb einer Längsverschiebung so entlang der Längsachse führen, dass ein Formschluss durch ein Eingreifen des Zahnradsektors in die Kette gewährleistet ist. Im Obergurt der Kettenführung ist eine Anschräge von beispielsweise 14° vorgesehen, die eine Kollision eines Kettenrads zum Antrieb der Kette, insbesondere an der Beladeseite und der Entladeseite, mit dem Zahnradsektor verhindert. Im Untergurt befindet sich vorteilhafterweise eine weitere Kettenführung die die Kette entlang der Längsachse, beispielsweise in einem Vierkantprofil führt.

Die Kette kann beispielsweise durch ein Antriebskettenrad an der Beladeseite und ein Laufkettenrad an der Entladeseite, insbesondere durch ein Langloch mittels einer Getriebeachse, gespannt und befestigt sein.

Die Kette kann beispielsweise über eine Antriebskettenrad und ein Getriebe, insbesondere ein Winkelgetriebe, von einem Motor, insbesondere einem Elektromotor und/oder einem hydrostatischen Antrieb, angetrieben sein.

Das Verschiebesystem umfasst zumindest eine, bevorzugt hydraulische und/oder pneumatische, Zinkenhubvorrichtung zur Verschiebung zumindest eines der Ladezinken entlang einer vertikalen Hubachse relativ zu dem Hauptrahmen. Die Zinkenhubvorrichtung kann zumindest teilweise in die Abstützvorrichtung integriert sein. Mit Hilfe der Zinkenhubvorrichtung kann die Ladung mit den Ladezinken angehoben und abgestellt werden.

Die Zinkenhubvorrichtung umfasst beispielsweise zumindest einen Teleskophubzylinder, dessen Hubbewegung direkt oder beispielsweise über ein Hebelsystem an den oder die Ladzinken übertragen wird. Die Zinkenhubvorrichtung kann einen Gummibalg, insbesondere mit einem Hebelsystem umfassen. Die Zinkenhubvorrichtung kann eine Druckluftschiene und/oder einen Keilhub, insbesondere eine höhenverstellbare Schlittenführung, beispielsweise von der ERO-Führungen GmbH, mit zwei horizontal ineinander fahrenden Keilen, beispielsweise mit einem horizontal wirkenden Hydraulikzylinder umfassen, wobei sich die Druckluftschiene oder der Keilhub insbesondere über eine gesamte Länge der Ladezinken erstrecken kann, um einen gleichmäßigen und zuverlässigen Hubvorgang zu gewährleisten. Die Zinkenhubvorrichtung kann eine Anzahl von, beispielsweise zwei, Laufrädern und/oder einen einfachen oder doppelten Schraubenspindelantrieb, insbesondere mit einem Hebelsystem, umfassen.

Die Zinkenhubvorrichtung kann beispielsweise berührungslos, insbesondere induktiv, über eine Stromschiene mit Schleifkontakten und/oder eine Anzahl von flexiblen Druckluft- oder Stromleitungen versorgt sein, die insbesondere auf zumindest einen an dem Hauptrahmen angeordneten Schlauchaufroller aufrollbar sind. Beispielsweise kann in den beiden oberen Ecken des U-Profils eines Ladezinkens im Untergurt eine Hochdruck-Stahlleitung mit jeweiligen T-Verbindungen zu den einzelnen Hubteleskopzylindern oder Gummibälgen der Zinkenhubvorrichtung installiert sein. Alternativ oder ergänzend kann Mittig des U-Profils eine T-Hochdruck-Stahlleitung vertikal bis zu dem unteren Schenkel des U-Profils abgeführt sein, sodass eine Verbindung zu der Lauffläche eines Laufrads seitwärts mittels Ösen zum schonenden Auf- und Abrollen der flexiblen Hochdruckleitung, insbesondere randgeführt, möglich ist.

Die Höhenverstellung der Ladezinken kann beispielsweise durch eine Drehpunktbefestigung unterhalb des Ladezinkens und eines Teleskopzylinders und/oder einer Gummimembran eines Druckzylinders mittels eines Hebels mit Kulissenführung umgesetzt sein und/oder durch eine Befestigung unterhalb des Ladezinkens und eines Teleskopzylinders und/oder einer Gummimembran eines Druckzylinders parallel umgesetzt sein.

Im Untergurt eines Ladezinkens ist beispielsweise eine Antriebstechnik des Verschiebesystems, umfassend insbesondere eine Leistungselektronik, eine Steuerelektronik, einen Verdichter, beispielsweise einen Magnetdruckzylinder und/oder einen Tandemachsialmagnetkolbenverdichter, ein Speichermedium (Hydraulik), zumindest eine Versorgungsleitung zu Energie- und/oder Steuersignalübertragung, zumindest eine Hochdruckleitung, insbesondere mit Hydraulikspeicher und/oder T-Stückverbindungen, zur Übertragung von Energie an einzelne Teleskopzylinder der Zinkenhubvorrichtung, eine Sensorik, zumindest ein Magnetventil, einen Digitaldecoder und/oder eine Platine angeordnet, damit das Verschiebesystem möglichst wenig Bauraum beansprucht.

Eine Bauhöhe der Antriebstechnik ist vorzugsweise von 50 mm bis 100 mm, beispielsweise ca. 63 mm, so dass die Technik in den jeweiligen Zwischenräumen unter den Ladezinken angeordnet werden kann. Zur Bauraumoptimierung sollte ein Durchmesser der Laufräder und/oder Laufrollen nicht größer als 70 mm sein.

Die Versorgungsleitungen können beispielsweise durchgängig mit jeweils einer T-Abzweigung an die jeweiligen Verbraucher angebunden ein. Die Leitungen sind vorzugsweise in einem oder in beiden oberen Winkeln eines Ladezinkens mit U-förmigem nach unten offenen Profil angeordnet.

Ferner kann ein Laufrad eines Ladezinkens durch eine Vertikalführung und/oder eine Kettenführung geführt sein. Der Vortrieb zur Längsveschiebung des Ladezinkens kann durch das Einwirken eines innenliegenden Zahnradsektors in eine Antriebskette stattfinden. Der Vortrieb kann durch einen in dem Laufrad integrierten Nabenmotor, der beispielsweise über eine Stromschiene mit elektrischem Strom versorgt werden kann, erfolgen, Insbesondere kann der Nabenmotor einzeln, beispielsweise über eine speicherprogrammierbare Steuerung (SPS) und/oder eine Decoderansteuerung, steuerbar sein, sodass Längsverschiebungen mehrerer Ladezinken, beispielsweise zur Aufnahme unterschiedlich angeordneter Paletten, unabhängig voneinander erfolgen können.

Der Vortrieb zur Längsveschiebung des Ladezinkens kann über eine an dem Ladezinken angebrachte Profilzahnstange erfolgen, die beispielsweise mit den Drehachsen der Laufräder einer Abstützvorrichtung des Ladezinkens verbunden ist. Somit können, insbesondere bei Querpalettentransport, mehrere vertikal geführte Stößelantriebe übergreifend (analog einer Sinuslinie) durch Ein- und Ausfahren unter Umgehung einer Querlattung der Paletten in den jeweiligen freien Feldern der Paletten dynamisch in die Profilzahnstange eingreifen und so die Längsverschiebung des Ladezinkens bewirken.

Vorteilhafterweise ist die zumindest eine Zinkenhubvorrichtung dazu ausgelegt, eine Höhenposition der Ladezinken entlang der Hubachse individuell oder zumindest in Zweiergruppen einzustellen. Dadurch können auf vielfältige Weise unterschiedliche Anzahlen und/oder Anordnungen von Paletten umgeladen werden.

Das Verschiebesystem kann zumindest eine, bevorzugt hydraulische und/oder pneumatische, Querverschiebevorrichtung zur Verschiebung zumindest eines der Ladezinken entlang einer zur Längsachse senkrechten, horizontalen Querachse relativ zu dem Hauptrahmen umfassen. Die Querverschiebeeinrichtung erlaubt es, die Abstände der Ladezinken voneinander auf unterschiedliche Arten und/oder Anordnungen von Ladung einzustellen. Beispielsweise können sechs Ladezinken durch die Querverschiebeeinrichtung entweder so angeordnet werden, dass sie drei längs nebeneinander angeordnete Europoolpaletten oder zwei quer nebeneinander angeordnete Europoolpaletten aufnehmen können. Insbesondere ist es möglich, die Abstände auf den Ladezinken befindlicher Paletten entlang der Querachse zu vergrößern oder zu verkleinern, um eine einfachere Einzelpalettenentnahme nach dem Entladen zu realisieren.

Mit Hilfe der Querverschiebevorrichtung können die beispielsweise horizontal auf einem Querträger des Hauptrahmens um ca. 23 cm nach links oder rechts verschoben werden, wobei vorzugsweise jeder Ladezinken einzeln gesteuert ist. Jeweils ein doppelwirkender, insbesondere hydraulischer und/oder pneumatischer, Aktor kann an dem Querträger und jeweils einem Ladezinken befestigt sein. Vorzugsweise sind die äußeren vier von sechs Ladezinken ohne eigenen Aktor an dem höhenverstellbaren Querträger befestigt, der sich beispielsweise um ca. 20 cm aufwärts oder abwärts bewegen kann. In dieser Ausgestaltung ist die Ladebrücke besonders einfach aufgebaut.

Das Verschiebesystem kann zumindest ein Anzeigemittel zur Anzeige einer Position zumindest eines der Ladezinken zumindest entlang der Längsachse umfassen. Durch das Anzeigemittel kann ein Bediener der Verladebrücke beispielsweise auf einfache Weise erkennen, wie weit der Ladezinken in einen Laderaum eines Lastkraftwagens eingefahren ist oder zur Aufnahme wie vieler Paletten der Ladezinken positioniert ist. Das Anzeigemittel kann beispielsweise eine Anzahl von Markierungen oder Piktogrammen an dem zumindest einen Ladezinken umfassen.

Das Anzeigemittel kann einen elektronischen Positionssensor für die Position des Ladezinkens und einen elektronischen Bildschirm zur Anzeige der Position und/oder einer aus der Position abgeleiteten Größe, wie beispielsweise eine Anzahl in der aktuellen Position aufnehmbarer Paletten, umfassen. Der Bildschirm kann entfernt von dem Positionssensor angeordnet sein und beispielsweise ein Bildschirm eines tragbaren Computergeräts, insbesondere eines Smartphones, sein. In diesen Ausgestaltungen kann der Bediener die Position des Ladezinkens besonders komfortabel, insbesondere auch ohne Sichtkontakt zu dem Ladezinken, überwachen.

Die Ladebrücke kann zumindest eine, bevorzugt hydraulische und/oder pneumatische, Hubvorrichtung zur Höhenverstellung des Hauptrahmens entlang einer vertikalen Hubachse relativ zu dem Fahrsystem umfassen. Durch die Hubvorrichtung können der Hauptrahmen und die Ladezinken auf unterschiedliche Höhen über einer Bodenebene, auf der das Fahrwerk aufliegt, gebracht werden. Dadurch kann die Ladung auf unterschiedlichen Höhen aufgenommen und/oder abgesetzt werden. Dadurch kann die Ladung beispielsweise besonders schnell zwischen einem Lastkraftwagen, einer Lagerhalle, einem Paletten-Fördersystem, einem Paletten-Förderband und/oder einer Lagerfläche, die sich auf unterschiedlichen Höhen befinden können, umgeladen werden.

Anders als im vorbekannten Stand der Technik kann durch eine erfindungsgemäße Hubvorrichtung ein Höhenunterschied zwischen zwei Depots ohne Verkippen nur durch eine vertikale Translation der Ladezinken und der davon getragenen Ladung überbrückt werden. Besonders vorteilhaft hierbei ist, dass aufgrund einer vertikal verfahrbaren Hubvorrichtung die im Wesentlichen horizontale Ausrichtung der Ladezinken, die zur sicheren Aufnahme von Ladegut, wie insbesondere von Paletten, erforderlich ist, erhalten bleibt. So können beispielsweise mehrere entlang der Längsachse hintereinander angeordnete Paletten durch einen Satz Ladezinken gleichzeitig aufgenommen werden. Erfindungsgemäß können die Ladezinken und ihre verschiebliche Lagerung am Hauptrahmen, gerade zur Aufnahme höherer Lasten wie mehrerer Paletten, stabiler ausgelegt werden als im Stand der Technik, in dem eine Verkippung zwischen Ladebrücke und Fahrzeug und/oder Laderampe vorgesehen ist.

Die Ladebrücke kann zumindest ein Hydraulikaggregat und/oder einen Kompressor, beispielsweise einen Hubkolbenkompressor und/oder einen Schraubenkompressor, für die Verschiebevorrichtung und/oder die Hubvorrichtung umfassen.

Eine Höhe einer von den Ladezinken gebildeten Ladefläche kann vorteilhafterweise zumindest in einem Bereich von 0,1 m bis 1,8 m über der Bodenebene einstellbar sein, um typische Anwendungsfälle im Transportwesen abzudecken.

Die Hubvorrichtung kann eine Anzahl von, beispielsweise vier, vertikal ausgerichteten Hubträgern umfassen, wobei der Hauptrahmen insbesondere an den Hubträgern voneinander unabhängig höhenverstellbar sein kann. Dadurch kann beispielsweise auch auf einer nicht horizontalen Bodenebene eine horizontale Ladefläche erreicht werden, um ein Verrutschen der Ladung auf der Ladefläche zu vermeiden.

Anstelle der Hubträger kann die Hubvorrichtung beispielsweise ein Scherenhubsystem, insbesondere eine Scherenhubbühne, zur Höhenverstellung des Hauptrahmens gegenüber dem Fahrsystem, beispielsweise mit Hilfe eines Rollensystems und/oder zumindest eines Druckzylinders, umfassen.

Der Hauptrahmen kann über eine Anzahl von Führungsrollen, insbesondere mit Wälzlagern, Nadellagern und/oder Schrägkugellagern, an den Hubträgern geführt sein.

Die Hubvorrichtung kann beispielsweise eine Anzahl von Elektromotoren, doppeltwirkenden oder einfachwirkenden Hydraulikzylindern, Spindelantrieben, Zahnstangenantrieben und/oder Seilzugantrieben umfassen. Die Hubvorrichtung kann zumindest ein Getriebe, das beispielsweise als Zahnstangengetriebe oder Seilzuggetriebe ausgestaltet sein kann, umfassen.

Die Hubträger können beispielsweise als Doppel-T-Träger, insbesondere mit jeweils einer oberen Abschlussplatte und/oder einer Bodenplatte ausgestaltet sein. Die Bodenplatte kann beispielsweise mit einer Grundplatte eines Fahrwerks verbunden, insbesondere verschraubt sein. Als Verstärkung zwischen den Hubträgern und der Grundplatte und/oder dem Fahrwerk können Knotenbleche angebracht sein.

Insbesondere an der Unterseite der oberen Abschlussplatte und an der Grundplatte können beispielsweise Doppelaugenlager befestigt, insbesondere angeschweißt, sein, um einen Hubzylinder, beispielsweise mittels eines Befestigungsbolzens mit Anschlag und Sicherung, anzubringen. Der Hubzylinder ist beispielsweise so montiert, dass die Kolbenstange des Hubzylinders nach unten angeordnet ist. Um sowohl eine Hubbewegung als auch eine Senkbewegung antreiben zu können, ist der Hubzylinder vorteilhafterweise als doppelwirkender Zylinder ausgestaltet.

Zur Vertikalversteifung können die Hubträger eine rechteckige Verbindung mit integrierter Diagonalversteifung, beispielsweise mittels Gewindeverspannung, insbesondere auf der oberen Stirnfläche der vier Hubträger, umfassen.

Das Fahrsystem kann zum Verfahren der Ladebrücke zumindest entlang der Längsachse und entlang einer zur Längsachse senkrechten, horizontalen Querachse, insbesondere in beliebigen horizontalen Richtungen, und insbesondere zum Drehen der Ladebrücke um eine vertikale Achse ausgelegt sein. Dadurch kann die Ladebrücke besonders schnell und einfach zwischen den beiden Depots verfahren werden. Dazu umfasst das Fahrsystem eine Anzahl von, vorzugsweise zumindest vier, Fahrwerken. Durch zumindest vier Fahrwerke wird eine besonders stabile Auflage der Ladebrücke auf einem Untergrund erreicht.

Um ein problemloses Verfahren auch bei Bodenunebenheiten sicherzustellen, sind die Fahrwerke vorteilhafterweise auf eine Bodenfreiheit des Hauptrahmens von zumindest 8 bis 10 cm ausgelegt. Insbesondere können die Fahrwerke jeweils zumindest eine Vertikalführung mit einem Hubzylinder umfassen, um die Bodenfreiheit je nach Einsatzort anpassen zu können, beispielsweise bei unwegsamem oder geneigtem Gelände.

Zur besonders platzsparenden Anordnung können die Fahrwerke zumindest teilweise in Aussparungen oder Sprungstellen des Hauptrahmens aufgenommen sein.

Ein Fahrwerk umfasst beispielsweise eine obere Grundplatte und eine darunter angeordnete Lenkgetriebeglocke mit einem, beispielsweise ungefederten und/oder ungedämpften, Standrohr, und einer Aufnahme für eine Achse, beispielsweise eine horizontale Pendelachse. Beispielsweise an dem Standrohr kann zumindest ein Anschlag zur Begrenzung eines Pendelausschlags der Pendelachse angeordnet sein. Die Lenkgetriebeglocke und/oder das Standrohr können beispielsweise Sphäroguss oder Feinkornbaustahl bestehen. Die horizontale Pendelachse kann beispielsweise ein Rohrprofil oder ein Rechteckprofil aufweisen und/oder mittels einer Dreieckbefestigung symmetrisch zwischen der Pendelachse und dem Standrohr, beispielsweise mit zumindest einem Bolzen, mit dem Standrohr verbunden sein.

Das Standrohr kann einen Stoßdämpfer umfassen, der beispielsweise innenliegend oder außenliegend eine Spiralfeder, eine Druckluftfeder und/oder einen Schwingungsdämpfer umfassen kann. Der Stoßdämpfer kann eine mechanische und/oder elektrische Feststellarretierung umfassen, um beim Beladen und/oder Entladen der Ladebrücke ein konstantes Höhenniveau der Ladefläche zu gewährleisten. In einer besonders einfachen Ausgestaltung kann das Fahrwerk auch ungefedert und/oder ungedämpft sein.

Die Ladebrücke kann, insbesondere an der Beladeseite und/oder an der Entladeseite zumindest einen Niveausensor umfassen. Die Ladebrücke kann eine kommunikativ mit dem zumindest einen Niveausensor und mit zumindest einer Druckluftfeder zumindest eines Fahrwerks verbundene Steuervorrichtung umfassen, die zur automatisierten Niveauregulierung der Ladebrücke ausgelegt ist. Dadurch kann insbesondere ein möglicher Neigungswinkel zwischen einem Untergrund unter der Ladebrücke und einer Ladefläche eines Depots, der ein Ausfahren der Ladezinken auf die Ladefläche behindern könnte, ausgeglichen werden. Wenn das Depot einen LKW, insbesondere einen Trailer, umfasst, kann ein möglicher Neigungswinkel auch durch die an dem LKW üblicherweise vorhandene Niveauregulierung ausgeglichen werden.

Ein Fahrwerk kann eine Anzahl von, vorzugsweise zwei, Rädern umfassen, mit denen das Fahrwerk auf einem Untergrund aufliegt. Die Räder können eine Bereifung, vorzugsweise mit Vollgummireifen und/oder als Doppelbereifung, um eine hohe Tragfähigkeit sicherzustellen, umfassen. Für einen besonders einfachen Aufbau ist auch eine Einfachbereifung möglich. Umfasst ein Fahrwerk zwei Räder können davon jeweils eines oder beide angetrieben und/oder gebremst sein und/oder die Räder können über eine starre Welle oder über ein Differential, insbesondere ein Sperrdifferential, miteinander verbunden sein. Ein Fahrwerk kann beispielsweise als H/T-Fahrwerk, L-Fahrwerk oder U-Fahrwerk ausgestaltet sein.

Das Fahrsystem kann zumindest eine motorisierte Drehvorrichtung zur Drehung zumindest eines der Fahrwerke, insbesondere um zumindest 180°, vorzugsweise zumindest 200°, um eine vertikale Drehachse relativ zu dem Hauptrahmen umfassen. Die zumindest eine Drehvorrichtung kann insbesondere zur, bevorzugt synchronen, Drehung mehrerer, vorzugsweise aller, Fahrwerke ausgelegt sein. Jeweils eine Drehvorrichtung kann zur Drehung mehrerer Fahrwerke, beispielsweise über ein Getriebe, ausgelegt sein. Die Drehvorrichtung kann beispielsweise einen hydrostatischen Antrieb, insbesondere mit einer Anzahl von, beispielsweise zwei, insbesondere tangential auf die Lenkgetriebeglocke wirkenden, Hydraulikzylindern, umfassen. Insbesondere kann bei einem hydrostatischen Antrieb auf ein mechanisches Getriebe verzichtet werden. Vorzugsweise ist jeweils eine Drehvorrichtung zur Drehung genau eines Fahrwerks ausgelegt, da so auf aufwändige Getriebe zur Ansteuerung mehrerer Fahrwerke verzichtet werden kann. Durch die Drehvorrichtung kann die Ladebrücke besonders einfach, insbesondere mit einem kleinen Wendekreis, manövriert werden und beispielsweise auch ohne die Ladebrücke zu drehen entlang der Querachse der Ladebrücke verfahren werden.

Die Drehvorrichtung kann sich beispielsweise in der Lenkgetriebeglocke befinden und/oder mechanisch, beispielsweise über ein Planetengetriebe, mit einem Gleichstrommotor oder einem Mehrphasenwechselstrom-Asynchronmotor oder mit einem hydrostatischen Antrieb angetrieben sein. Die Drehvorrichtung kann einen Drehwinkelsensor zur Bestimmung eines Drehwinkels eines Fahrwerks umfassen. Mit Hilfe von Drehwinkelsensoren kann vorteilhafterweise die Drehung mehrerer Fahrwerke synchronisiert gesteuert werden.

Die Fahrwerke können zumindest eine Antriebsvorrichtung, insbesondere einen Elektromotor und/oder einen hydrostatischen Antrieb, zum Antrieb zumindest eines der Fahrwerke umfassen. Die zumindest eine Antriebsvorrichtung kann insbesondere zum Antrieb mehrerer, vorzugsweise aller, Fahrwerke ausgelegt sein. Jeweils eine Antriebsvorrichtung kann zum Antrieb mehrerer Fahrwerke, beispielsweise über ein Getriebe, ausgelegt sein. Vorzugsweise ist jeweils eine Antriebsvorrichtung zum Antrieb genau eines Fahrwerks ausgelegt, da so auf aufwändige Getriebe zur Ansteuerung mehrerer Fahrwerke verzichtet werden kann.

Der Verbrennungsmotor kann beispielsweise als hydrostatischer Antrieb, Erdgasmotor, Dieselmotor, Benzinmotor, Wasserstoffmotor oder Hybridmotor ausgestaltet sein. Vorzugsweise umfasst die Antriebsvorrichtung zumindest einen mit Gleichstrom, Wechselstrom oder Mehrphasen-Wechselstrom betriebenen Elektromotor, da dieser besonders wartungsarm ist und kein Getriebe benötigt. Ferner kann ein Elektromotor als Radmotor oder Nabenmotor besonders platzsparend an oder in einem Rad des Fahrwerks angeordnet sein.

Für ein schnelles Umladen erlaubt die Antriebsvorrichtung ein Verfahren der Ladebrücke mit einer Geschwindigkeit von zumindest 6 km/h, vorzugsweise zumindest 18 km/h. Für ein ausreichend schnelles Verfahren mit einer typischen Ladung hat sich eine Gesamtleistung des Antriebssystems von 150 bis 200 kW, insbesondere 170 kW, als vorteilhaft erwiesen.

Die Fahrwerke können zumindest eine, insbesondere elektromechanische, hydraulische und/oder pneumatische, Bremsvorrichtung zum Abbremsen zumindest eines der Fahrwerke umfassen. Die Bremsvorrichtung kann beispielsweise eine Anzahl von Wirbelstrombremsen, Scheibenbremsen, Federspeicherbremsen, Trommelbremsen und/oder Feststellbremsen umfassen. Vorteilhafterweise ist die zumindest eine Bremsvorrichtung zum Abbremsen von zumindest zwei, insbesondere allen, Fahrwerken ausgelegt. Jeweils eine Bremsvorrichtung kann zum Abbremsen mehrerer Fahrwerke ausgelegt sein. Vorzugsweise ist jeweils eine Bremsvorrichtung zum Abbremsen genau eines Fahrwerks ausgelegt, da durch voneinander unabhängige Bremsvorrichtungen die Betriebssicherheit der Ladebrücke erhöht wird. Ferner wird dadurch die Wartung vereinfacht, da eine defekte Bremsvorrichtung einfacher ausgetauscht werden kann.

Vorteilhafterweise sind die Fahrwerke gegeneinander austauschbar, weil dadurch die Wartung vereinfacht wird, beispielsweise weil so jedes Fahrwerk bei einem Defekt durch ein einheitliches Ersatz-Fahrwerk ersetzt werden kann.

Die Fahrwerke können symmetrisch zu einer Mittel-Querschnittsebene der Ladebrücke auf der Beladeseite und der Entladeseite angeordnet sein. Die Mittel-Querschnittsebene befindet sich in der Mitte zwischen der Beladeseite und der Entladeseite und ist senkrecht zur Längsachse der Ladebrücke orientiert. Die symmetrische Anordnung sorgt dafür, dass die Ladebrücke durch die Fahrwerke sowohl beim Beladen auf der Beladeseite als auch beim Entladen auf der Entladeseite oder umgekehrt stabil unterstützt ist.

Damit die Ladebrücke eine vollständige Ladung eines Lastkraftwagens aufnehmen kann, haben die Fahrwerke vorteilhafterweise eine Gesamttragfähigkeit von zumindest 7,5 t; insbesondere 13 t, vorzugsweise 45 t. Die Gesamttragfähigkeit setzt sich beispielsweise zusammen aus ca. 30 t für eine Ladung eines Sattelzugs aus 33 oder 34 Europoolpaletten, ca. 4 t für vier Fahrwerke und ca. 11 t für die restlichen Komponenten der Ladebrücke.

Die Ladebrücke kann zumindest eine, insbesondere witterungsgeschützte, Energieversorgung zur Versorgung der Ladebrücke mit, insbesondere elektrischer, Energie umfassen. In einer besonders einfachen Ausgestaltung umfasst die Energieversorgung ein Übertragungsmittel, beispielsweise ein Kabel oder einen Stromabnehmer für eine Oberleitung oder eine Stromschiene, zur Übertragung von Energie von einer externen Energiequelle an die Ladebrücke.

Ein Witterungsschutz kann zum Beispiel durch Anordnung der zu schützenden Komponenten in zumindest einem abgedichteten Schaltschrank umgesetzt sein.

Die Energieversorgung kann zumindest einen Energiespeicher, insbesondere einen Akkumulator, beispielsweise mit Panzerplatten-Technologie, insbesondere zur Speicherung von zumindest 50-80 Ah bei 24 V, und/oder zumindest eine Energiegewinnungsvorrichtung, insbesondere eine Gasturbine, einen, beispielsweise dieselelektrischen, Generator und/oder eine Brennstoffzelle, umfassen. Die Ladebrücke kann einen Kraftstofftank zur Aufnahme von beispielsweise Dieselkraftstoff oder Flüssiggas (LPG) umfassen. Der Energiespeicher kann zumindest einen Wechselrichter, ein integriertes oder externes Ladegerät und/oder eine Spannungsanzeige, beispielsweise durch LED, digital und/oder analog, umfassen. Die Energiegewinnungsvorrichtung kann zumindest einen Gleichrichter umfassen. Durch einen Energiespeicher und/oder eine Energiegewinnungsvorrichtung kann die Ladebrücke unabhängig von einer externen Energiequelle besonders vielseitig eingesetzt werden.

Die Energieversorgung kann beispielsweise zwischen zwei Fahrwerken über einen Rahmen, beispielsweise aus Profilstahl, insbesondere an beiden Grundplatten der Fahrwerke vorzugsweise schwingungsgedämpft montiert sein. Dabei besteht vorzugsweise keine starre mechanische Verbindung mit der Hubvorrichtung.

Die Ladebrücke kann zumindest eine, insbesondere witterungsgeschützte, Steuervorrichtung zur, insbesondere zumindest teilautomatisierten, Steuerung der Ladebrücke umfassen. Die Steuerung der Komponenten der Ladebrücke, wie beispielsweise Verschiebesystem, Hubvorrichtung und Fahrsystem, zum sicheren Umladen der Ladung ist so komplex, dass sie von einem Bediener nicht zuverlässig manuell durchgeführt werden kann. Daher ist zum zuverlässigen Betrieb der Ladebrücke eine, vorteilhafterweise teilautomatisierte, Steuervorrichtung notwendig. Insbesondere kann ein Verfahren der Ladebrücke, ein Positionieren der Ladebrücke an einem der Depots, ein Positionieren der Ladezinken und/oder ein Aufnehmen, Absetzen und/oder Identifizieren der Ladung zumindest teilautomatisiert erfolgen.

Die Steuervorrichtung kann zumindest eine speicherprogrammierbare Steuerung umfassen.

Die Steuervorrichtung kann zumindest eine Bedienvorrichtung, beispielsweise ein Bedienpult, insbesondere mit einem Bildschirm, zur Bedienung der Steuervorrichtung durch einen Bediener umfassen.

Die Steuervorrichtung kann zumindest eine Kommunikationsvorrichtung zur, insbesondere kabellosen, kommunikativen Verbindung der Steuervorrichtung mit einem externen Steuergerät, beispielsweise einer Funk-Fernsteuerung, einer Infrarot-Fernsteuerung, einem Smartphone oder einem Tablet-Computer umfassen. Die Kommunikationsvorrichtung erlaubt eine Bedienung der Ladebrücke, ohne dass sich dafür ein Bediener in unmittelbarer Nähe der Ladebrücke, insbesondere in einem durch den Betrieb der Ladebrücke verursachten Gefahrenbereich, aufhalten muss.

Die Ladebrücke kann zumindest eine Wetterschutzvorrichtung zum Schutz der Ladung vor Witterungseinflüssen, insbesondere vor Wärme, Kälte, UV-Einstrahlung, Staub oder Nässe, umfassen. Die Wetterschutzvorrichtung kann beispielsweise einen, insbesondere demontierbareren, Rahmen, beispielsweise aus Aluminium, mit einer, insbesondere transparenteren Plane, insbesondere mit einem Dichtwulst, umfassen. Die Wetterschutzvorrichtung kann zumindest ein an einer Beladeseite und/oder Entladeseite der Ladebrücke angeordnetes Tor, beispielsweise ein Rolltor, vorzugsweise je ein Tor an der Beladeseite und der Entladeseite, zur Aufnahme der Ladung in die Wetterschutzvorrichtung umfassen.

Die Ladebrücke kann zumindest eine Bedienerkabine für einen Bediener der Ladebrücke umfassen. Der Bediener wird beispielsweise durch eine zwischen den Fahrwerken auf Höhe der Ladefläche angeordnete Bedienerkabine geschützt. Die Bedienerkabine kann halb geschlossen, zu drei Vierteln geschlossen oder komplett geschlossen ausgebildet sein und/oder ein Heizgerät und/oder Kühlgerät umfassen. Vorteilhafterweise ist die Bedienerkabine mit zumindest einem Scheibenwischer im Sichtfeld zur Fahrtrichtung und/oder Laderichtung ausgestattet. Vorzugsweise ist die Bedienerkabine zum Schutz eines Bedieners vor Vibrationen schwingungsgedämpft mit der Ladebrücke verbunden.

Die Ladebrücke kann jeweils eine Bedienerkabine an der Beladeseite und der Entladeseite der Ladebrücke umfassen, die insbesondere an einander diagonal gegenüberliegenden Ecken der Ladebrücke, beispielsweise an dem Hauptrahmen oder einem Fahrwerk, angeordnet sein können. Dadurch kann ein Bediener einen Ladevorgang sowohl an der Beladeseite als auch an der Entladeseite genau überwachen.

Die zumindest eine Bedienerkabine, insbesondere jeweils eine Bedienerkabine an jeder der beiden Längsseiten der Ladebrücke, kann entlang der Längsachse der Ladebrücke zwischen der Beladeseite und der Entladeseite, beispielsweise entlang einer Führungsschiene, verfahrbar mit der Ladebrücke, insbesondere mit dem Hauptrahmen, verbunden sein. Das Verfahren der Bedienerkabine kann mechanisch und/oder elektrisch, beispielsweise mit einem Zahnstangengetriebe und/oder einem Elektromotor angetrieben sein.

Die Ladebrücke kann zumindest eine Auslesevorrichtung, beispielsweise einen Barcode-Scanner, QR-Code-Scanner oder RFID-Scanner, zum Auslesen eines Identifikationsmerkmals der Ladung umfassen. Die zumindest eine Auslesevorrichtung kann an einem Leichtmetallprofil, höhenverstellbar und/oder horizontal entlang der Querachse verschieblich, angeordnet sein, um auf unterschiedliche Anordnungen der Identifikationsmerkmale an der Ladung angepasst werden zu können. Vorteilhafterweise umfasst die Ladebrücke drei Auslesevorrichtungen, sodass drei Paletten, die nebeneinander auf die Ladebrücke aufgenommen werden, gleichzeitig erfasst werden können. Durch die Auslesevorrichtung kann besonders zeitsparend schon während des Umladens der Inhalt der Ladung erfasst werden.

Die Ladebrücke kann zumindest eine Fixiervorrichtung zur, insbesondere automatischen, Fixierung der Ladung auf der Ladebrücke zumindest während des Verfahrens der Ladebrücke umfassen. Die Fixiervorrichtung verhindert, dass sich die Ladung, insbesondere während des Verfahrens, unkontrolliert bewegt oder sogar von der Ladbrücke herunterfällt. Die Fixiervorrichtung kann beispielsweise eine Anzahl von Halteklammern für die Ladung, insbesondere für Paletten, umfassen.

Die Ladebrücke kann zumindest ein Pufferelement an der Beladeseite und/oder der Entladeseite umfassen, um Beschädigungen der Ladebrücke oder eines der Depots bei einer Kollision der Ladbrücke mit einem der Depots zu vermeiden. Das Pufferelement kann beispielsweise als ganzflächiger oder punktueller Gummipuffer ausgestaltet sein.

Die Ladebrücke kann zumindest eine, beispielsweise an dem Hauptrahmen angeordnete, Führungsvorrichtung, beispielsweise eine Anzahl von Leitblechen, zur Führung der Ladung entlang der Längsachse umfassen.

Die Ladebrücke kann zumindest ein, beispielsweise an dem Hauptrahmen, an der Beladeseite und/oder an der Entladeseite angeordnetes Überfahrblech umfassen. Durch das Überfahrblech kann ein Zwischenraum zwischen der Ladebrücke und einem der Depots überbrückt werden, sodass die Ladezinken von der Ladebrücke sicher unterstützt von der Ladebrücke in oder auf das jeweilige Depot ausgefahren werden können. Vorzugsweise ist das Überfahrblech, insbesondere höhenverstellbar, an dem Hauptrahmen, beispielsweise an einem Querträger, befestigt. Das Überfahrblech kann an seiner der Ladebrücke abgewandten Seite abgeschrägte Ecken aufweisen, um Beschädigungen an einem Depot oder Verletzungen durch eine Ecke des Überfahrblechs zu vermeiden.

Das Überfahrblech kann beispielsweise bei einer Positionierung der Ladezinken nach innen gefahren sein, um Ladebrücke an einer Laderampe zu positionieren und das Überfahrblech auf der Laderampenkante aufzulegen. Dabei kann das Überfahrblech, beispielsweise durch die Langlochbefestigung vertikal um ca. 20 cm nach unten gefahren werden. Beispielsweise die vier äußeren von sechs Ladezinken können dabei, beispielsweise hydraulisch oder pneumatisch nach oben fahren, so dass zwischen diesen Ladezinken und dem Überfahrblech keine Stoßkannte vorhanden ist.

Beispielsweise an dem Überfahrblech kann die Ladebrücke zumindest einen Ladebordsensor zur Detektion einer vertikalen Position einer Ladekante eines Depots, insbesondere eines LKW oder einer Laderampe, umfassen. Der Ladebordsensor kann mit einer Steuervorrichtung der Ladebrücke zur automatischen Höhenanpassung des Hauptrahmens an die Höhe der Ladekante verbunden sein.

Die Ladebrücke kann zumindest eine Sicherheitsvorrichtung für einen sicheren Betrieb der Ladebrücke umfassen. Insbesondere durch die Sicherheitsvorrichtung kann die Ladebrücke gemäß den Sicherheitsanforderungen der CE-Maschinenrichtlinie 98/37/EG oder 2006/42/EG für Flurförderfahrzeuge ausgelegt sein.

Die Sicherheitsvorrichtung kann zumindest einen Quetschschutzbalg, beispielsweise einen Kunstleder-Metall-Sicherheitsbalg, und/oder ein Quetschschutzblech an der Hubvorrichtung umfassen, um Quetschgefahr zu vermeiden.

Die Sicherheitsvorrichtung kann zumindest eine Beleuchtungsvorrichtung für die Ladebrücke, die Ladung und/oder eine Umgebung der Ladebrücke umfassen. Die Beleuchtungsvorrichtung kann beispielsweise eine Anzahl von LED-Strahlern, Scheinwerfern und/oder Rückleuchten umfassen.

Die Sicherheitsvorrichtung kann zumindest ein Sensorsystem, bevorzugt ein Kamerasystem, zur Überwachung der Ladebrücke, der Ladung und/oder einer Umgebung der Ladebrücke umfassen. Das Sensorsystem kann beispielsweise eine Anzahl von Kameras für sichtbares und/oder infrarotes Licht und/oder Ultraschallsensoren umfassen.

Die Sicherheitsvorrichtung kann zumindest einem optischen und/oder akustischen Warnsignalgeber, beispielsweise ein Blinklicht und/oder eine Hupe umfassen. Dadurch können in einem Umfeld der Ladebrücke befindliche Personen frühzeitig vor mit der Ladebrücke verbundenen Gefahren gewarnt werden. Zur besseren Erkennbarkeit kann die Ladebrücke zumindest abschnittsweise mit zumindest einer Signalfarbe, insbesondere mit einem schwarzgelb gestreiften Signalanstrich, markiert sein.

Die Sicherheitsvorrichtung kann zumindest einen Not-Ausschalter für die Ladebrücke umfassen, wobei vorzugsweise an jedem Ende der Entladeseite und der Beladeseite sowie insbesondere an der Bedienvorrichtung und/oder dem externen Steuergerät jeweils ein Not-Ausschalter angeordnet ist.

Die Sicherheitsvorrichtung kann zumindest einer Erdungsvorrichtung, zum Beispiel zumindest ein Masseband an einem Fahrwerk, für die Ladebrücke umfassen. Die Erdungsvorrichtung kann eine mögliche elektrostatische Aufladung der Ladebrücke, die zu Fehlfunktionen oder Verletzungen führen könnte, abgeleitet werden.

Die Ladebrücke ist vorzugsweise modular, insbesondere aus standardisierten Bauteilen, aufgebaut. Dadurch können einzelne Komponenten der Ladebrücke, beispielsweise bei einer Fehlfunktion oder zur Umrüstung auf wechselnde Betriebsanforderungen, schnell und kostengünstig ausgetauscht werden, sodass der Betrieb der Ladebrücke nur kurzzeitig unterbrochen werden muss.

Zumindest einer der Ladezinken kann ein, insbesondere in den Ladezinken integriertes, Ladungsverschiebesystem zur Verschiebung der Ladung auf dem Ladezinken entlang der Längsachse umfassen. Durch das Ladungsverschiebesystem kann beispielsweise die Ladung an der Beladeseite auf die Ladezinken aufgenommen, auf den Ladezinken zur Entladeseite verschoben und an der Entladeseite von den Ladezinken abgesetzt werden. Dadurch muss zum Entladen an der Entladeseite nicht die gesamte Länge der Ladezinken ausgefahren werden, sodass auch Teilladungen effizient umgeladen werden können und an der Entladeseite weniger Platz benötigt wird. Für eine besonders zuverlässige Verschiebung der Ladung umfasst vorzugsweise jeder Ladezinken ein Ladungsverschiebesystem.

Für eine energieeffiziente Verschiebung der Ladung kann eine Anzahl von Ladezinken an einer Fläche zur Aufnahme der Ladung eine reibungsreduzierende Oberfläche umfassen. Insbesondere wenn nicht jeder Ladezinken ein Ladungsverschiebesystem umfasst, umfassen die Ladezinken ohne Ladungsverschiebungssystem vorteilhafterweise reibungsreduzierende Oberflächen.

Das Ladungsverschiebesystem kann beispielsweise zumindest einen Kettenförderer, ein, insbesondere in den Ladezinken integriertes, Transportband und/oder eine Anzahl von, insbesondere in den Ladezinken integrierten, Transportrollen für die Ladung umfassen.

Beispielsweise kann beidseits eines, insbesondere jedes, Ladezinkens jeweils ein entlang der Längsachse ausgerichteter Kettenförderer angeordnet sein, um einen gleichmäßigen Antrieb der Ladung durch das Ladungsverschiebesystem zu gewährleisten. Um die Anzahl der Kettenförderer zu begrenzen, kann zwischen benachbarten Ladezinken nur jeweils ein Kettenförderer, der die Ladung auf beiden benachbarten Ladezinken antreiben kann, angeordnet sein.

Die Ladebrücke kann eine Stützvorrichtung für die Ladung, insbesondere für Paletten, umfassen. Die Stützvorrichtung ist vorteilhafterweise in einen Auflagebalken, auf dem ein Ladezinken aufliegt, integriert. Vorzugsweise kann die Stützvorrichtung aus einer an dem Auflagebalken anliegenden Ruhestellung in eine horizontal von dem Auflagebalken abstehenden Stützstellung zur Unterstützung der Ladung, insbesondere der Stützfüße einer Palette, ausgeklappt werden. Die Stützvorrichtung kann an Auflagepunkten von Palettenfüßen, beispielsweise an einem Querträger befestigte, jeweils eine versenkbare und vertikal gesteuerte, beispielsweise hydraulische und/oder pneumatische, Hubauflage, insbesondere mit Teleskopführung, umfassen.

Die Ladebrücke ist vorzugsweise für eine Betriebstemperatur von -25 °C bis +45 °C und/oder zur Erfüllung der elektromagnetischen Verträglichkeitsanforderungen der Norm VDE 0870 ausgelegt.

Ein erfindungsgemäßes Verfahren zum Umladen einer Ladung zwischen zwei voneinander beabstandeten Depots wird mit einer, insbesondere erfindungsgemäßen, Ladebrücke ausgeführt und umfasst zumindest die folgenden Schritte:
a) Heranfahren der Ladebrücke an das erste der Depots;
b) Vorwärts-Ausfahren einer Anzahl von, insbesondere zwei, vier oder sechs, Ladezinken von der Ladebrücke entlang einer Längsachse der Ladebrücke auf einer Beladeseite der Ladebrücke auf das erste Depot zu;
c) Anheben der Ladezinken zum Aufnehmen einer Ladung;
d) Zurückziehen der Ladezinken in die Ladebrücke;
e) Weiterfahren der Ladebrücke an das zweite der Depots;
f) Rückwärts-Ausfahren der Ladezinken von der Ladebrücke entlang der Längsachse an einer der Beladeseite gegenüberliegenden Entladeseite der Ladebrücke auf das zweite Depot zu;
g) Absenken der Ladezinken zum Absetzen der Ladung.

Durch die genannten Schritte ist ein besonders schnelles Umladen möglich. Vorteilhafterweise werden die Schritte in der genannten Reihenfolge ausgeführt. Das Vorwärts-Ausfahren und/oder das Rückwärts-Ausfahren erfolgen vorteilhafterweise um eine Länge der Ladung entlang der Längsachse über die Ladebrücke hinaus, sodass die Ladung sicher aufgenommen und/oder abgesetzt werden kann.

Die Ladung kann eine Mehrzahl von gegeneinander frei beweglichen Ladungseinheiten, bevorzugt standardisierten Paletten, umfassen, wobei insbesondere eine Mehrzahl von Ladungseinheiten senkrecht zu der Längsachse nebeneinander und/oder entlang der Längsachse hintereinander angeordnet ist. Beispielsweise kann die Ladung zumindest zwei oder drei nebeneinander und/oder zumindest zwei, drei, vier oder mehr hintereinander angeordnete Ladungseinheiten umfassen. Wenn die Ladung eine Mehrzahl von Ladungseinheiten umfasst, ergibt sich aus dem Verfahren, das ein gleichzeitiges Umladen aller Ladungseinheiten erlaubt, ein besonders großer Zeitvorteil gegenüber fachüblichen Verfahren, bei denen jede Ladungseinheit einzeln umgeladen werden muss.

Das Verfahren kann ein horizontales Querverschieben und/oder ein Höhenverstellen zumindest eines der Ladezinken senkrecht zu der Längsachse vor dem Vorwärts-Ausfahren umfassen. Dadurch kann eine Relativposition der Ladezinken zueinander auf die Art und/oder Anordnung der Ladung und/oder eine Höhe der Ladezinken an eine Höhenposition der Ladung angepasst werden.

Eine Steuervorrichtung der Ladebrücke kann das Verfahren zumindest teilautomatisiert steuern. Die Steuervorrichtung kann beispielsweise ein autonomes Heranfahren und/oder Weiterfahren der Ladevorrichtung, ein automatisiertes Ausrichten, Ausfahren und/oder Zurückziehen der Ladezinken, ein automatisiertes Aufnehmen, Absetzen und/oder Identifizieren der Ladung durchführen. Durch ein zumindest teilautomatisiertes Steuern werden Fehlbedienungen vermieden und das Verfahren kann besonders zuverlässig durchgeführt werden.

Zum Umladen einer vollständigen Ladung eines Standard-Sattelaufliegers aus 33 Europoolpaletten (drei Europoolpaletten nebeneinander und elf Europoolpaletten hintereinander längs zur Längsachse der Ladebrücke angeordnet) mit sechs Ladezinken kann das Verfahren in einer Ausgestaltung A zum Beispiel wie folgt ablaufen:
a) Parallelität der Beladeseite der Ladebrücke zu einer Ladekante des ersten Depots, beispielsweise eines Sattelaufliegers, und Vertikaleinstellung herstellen;
b) mit allen Ladezinken die Europoolpaletten auf einer Länge von 13,2 m unterfahren;
c) Ladung anheben;
d) Ladung auf die Ladebrücke zurück ziehen;
e) Ladung absetzen oder aufgebockt zur Ladekante des zweiten Depots fahren;
f) Hubhöhe und Parallelität der Entladeseite der Ladebrücke zur Ladekante herstellen,
g) Ladezinken auf die Ladefläche des zweiten Depots ausfahren;
h) Ladung absetzen und
i) Ladezinken einfahren auf die Ladebrücke.

Mit der Ausgestaltung A des Verfahrens ist es möglich, das Ladegut sowohl auf der Beladeseite als auch auf der Entladeseite der Ladebrücke aufzunehmen oder abzusetzen, insbesondere wenn eine, beispielsweise aufrollbare, Hydraulikleitung oder Hochdruckleitung zur Versorgung einer Zinkenhubvorrichtung längs der Ladezinken geführt ist, um mit den Bodenquerlatten der Europoolpaletten nicht zu kollidieren.

Zum Umladen einer vollständigen Ladung eines Standard-Sattelaufliegers aus 34 Europoolpaletten (zwei Europoolpaletten nebeneinander und 17 Europoolpaletten hintereinander quer zur Längsachse der Ladebrücke angeordnet) mit sechs Ladezinken kann das Verfahren zum Beispiel in einer Ausgestaltung B wie folgt ablaufen:
a) Parallelität der Beladeseite der Ladebrücke zu einer Ladekante des ersten Depots, beispielsweise eines Sattelaufliegers, und Vertikaleinstellung herstellen;
b1) die zwei mittleren Ladezinken zusammenfahren und die äußeren vier Ladezinken und ein Überfahrblech um mindestens eine Europoolpalettenhöhe nach oben fahren;
c1) mit den vier äußeren Ladezinken die Europoolpaletten auf einer Länge von 13,6 m unterfahren;
d) Ladung anheben;
e) Ladung auf die Ladebrücke zurück ziehen;
f) Ladung absetzen oder aufgebockt mit einer Drehung der Ladebrücke um 180° zur Ladekante des zweiten Depots fahren;
g) Hubhöhe und Parallelität der Beladeseite der Ladebrücke zur Ladekante herstellen,
h) Ladezinken auf die Ladefläche des zweiten Depots ausfahren;
i) Ladung absetzen und
j) Ladezinken einfahren auf die Ladebrücke.

Bei der Ausgestaltung B ist zu beachten, dass die äußeren vier Ladezinken um 150 mm, beispielsweise hydraulisch mittels eines Führungsschlittens vertikal zu heben sind, sodass das untere Palettenbrett nicht mit den horizontal zusammengefahrenen mittleren beiden Ladezinken kollidiert.

Alternativ zu den Schritten b1 und c1 ist folgender Schritt möglich:
c2) mit allen Ladezinken die Europoolpaletten auf einer Länge von 13,6 m unterfahren, wobei in die inneren Aufnahmeöffnungen der Paletten jeweils zwei Ladezinken eingreifen.

Das Durchschalten von der Beladeseite zur Entladeseite ist bei dieser Paletteanordnung (zwei Europoolpaletten nebeneinander quer zur Längsachse der Ladebrücke angeordnet) in der Ausgestaltung B eventuell nicht möglich, da sonst das Infrastrukturkabel (Hydraulik, Pneumatik und der Spannungsversorgung) mit dem Querfuß der Europoolpalette kollidiert. Daher ist in Schritt f eine Drehung um 180° vorgesehen, sodass auch das Entladen der Ladebrücke auf der Beladeseite erfolgt.

Das Durchschalten in der Ausgestaltung B ist beispielsweise möglich, wenn die Ladezinkenrollen, insbesondere jeweils jede zweite Rolle, mit einem Elektromotor und Schleifkontakten sowie im Obergurt des Balkens mit einer Zahnstange entlang der Längsachse ausgestattet sind. In diesem Fall kann in einer Ausgestaltung C auf Schritt f verzichtet werden, und eine vollständige Ladung eines Standard-Sattelaufliegers sowohl aus 33 längs zur Längsachse angeordneten Europoolpaletten als auch aus 34 quer zur Längsachse angeordneten Europoolpaletten kann mit der gleichen Ladebrücke durchgeschaltet werden. Die Hubverstellung kann ebenfalls elektromechanisch umgesetzt sein. Die Längsverschiebung und Hubverstellung der Ladezinken ist dabei bevorzugt über eine speicherprogrammierbare Steuerung (SPS) und/oder eine Decodersteuerung gesteuert.

Je nach Ausgestaltung der Ladebrücke kann diese wie oben beschrieben zur Durchführung des Verfahrens in einer oder mehreren, insbesondere allen, der Ausgestaltungen A, B und/oder C ausgelegt sein.

Sämtliche in den Anmeldungsunterlagen offenbarten Merkmale werden als erfindungswesentlich beansprucht, sofern sie einzeln oder in Kombination gegenüber dem Stand der Technik neu sind.

### Kurze Beschreibung der Zeichnungen

Weitere Vorteile, Ziele und Eigenschaften der Erfindung werden anhand nachfolgender Beschreibung und anliegender Zeichnungen erläutert, in welchen beispielhaft erfindungsgemäße Gegenstände dargestellt sind. Merkmale, welche in den Figuren wenigstens im Wesentlichen hinsichtlich ihrer Funktion übereinstimmen, können hierbei mit gleichen Bezugsziffern gekennzeichnet sein, wobei diese Merkmale nicht in allen Figuren beziffert und erläutert sein müssen. Bemaßungen in den Figuren sind in mm angegeben und jeweils beispielhaft zu verstehen.

Es zeigen:
[Fig.1] eine schematische Aufsicht auf eine erfindungsgemäße Ladebrücke;
[Fig.2] eine schematische Seitenansicht einer erfindungsgemäßen Ladebrücke;
[Fig.3] eine schematische Vorderansicht einer erfindungsgemäßen Ladebrücke;
[Fig.4] eine schematische Anordnung von Ladezinken zum Laden von zwei nebeneinander quer angeordneten Paletten;
[Fig.5] eine schematische Anordnung von Ladezinken zum Laden von drei nebeneinander längs angeordneten Paletten;
[Fig.6] eine schematische Aufsicht auf eine erfindungsgemäße Ladebrücke;
[Fig.7] eine schematische Darstellung eines Fahrwerks;
[Fig.8] eine schematische Darstellung eines Verschiebesystems;
[Fig.9] einen schematischen Querschnitt einer Querverschiebevorrichtung;
[Fig.10] einen schematischen Querschnitt einer Abstützvorrichtung;
[Fig.11] einen schematischen Querschnitt durch einen Hubträger;
[Fig.12] eine schematische Seitenansicht eines Führungsrahmens;
[Fig.13] eine schematische Seitenansicht einer Längsverschiebevorrichtung;
[Fig.14] eine schematische Seitenansicht einer Abstützvorrichtung;
[Fig.15] eine schematische Seitenansicht einer Längsverschiebevorrichtung;
[Fig.16] einen schematischen Querschnitt einer als Kettenantrieb ausgestalteten Längsverschiebevorrichtung;
[Fig.17] einen schematischen Querschnitt einer Stützvorrichtung;
[Fig.18] schematisch eine beispielhafte Ausgestaltung einer Zinkenhubvorrichtung;
[Fig.19] schematisch eine beispielhafte Ausgestaltung einer Abstützvorrichtung eines Ladzinkens;
[Fig.20] schematisch beispielhafte Ausgestaltungen eines Ladzinkens;
[Fig.21] schematisch beispielhafte Anordnungen von Ladzinken zur Aufnahme von drei längs angeordneten Paletten;
[Fig.22] schematisch beispielhafte Anordnungen von Ladzinken zur Aufnahme von zwei quer angeordneten Paletten;
[Fig.23] schematisch eine beispielhafte Ausgestaltung eines Kettenantriebs einer Ladeverschiebungsvorrichtung oder einer Längsverschiebungsvorrichtung;
[Fig.24] schematisch eine beispielhafte Ausgestaltung einer Zinkenhubvorrichtung;
[Fig.25] eine schematische Aufsicht auf eine erfindungsgemäße Ladebrücke;
[Fig.26] einen schematischen Querschnitt und Längsschnitt einer Abstützvorrichtung;
[Fig.27] eine schematische Seitansicht von Komponenten der Antriebstechnik des Verschiebesystems;
[Fig.28] eine weitere schematische Seitansicht von Komponenten der Antriebstechnik des Verschiebesystems.

### Fig.1

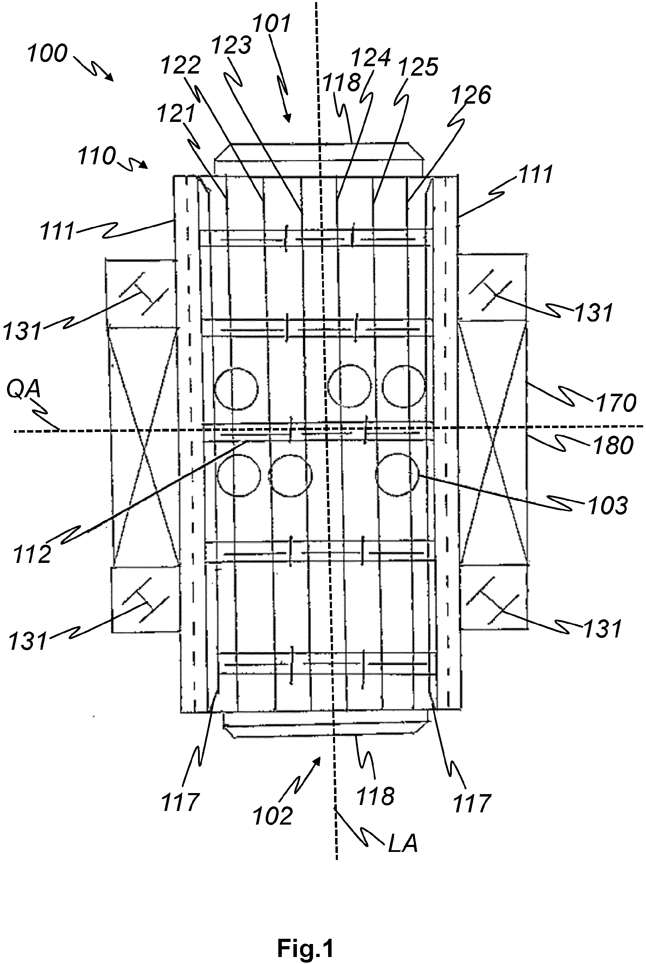

[Fig.1] zeigt eine schematische Aufsicht auf eine erfindungsgemäße Ladebrücke 100. Die dargestellte Ladebrücke 100 umfasst einen Hauptrahmen 110 mit einer Anzahl von, beispielsweise zwei Längsträgern 111 parallel zu einer Längsachse LA der Ladebrücke 100 und einer Anzahl von, beispielsweise sechs, Querträgern 112 (nur exemplarisch beschriftet) parallel zu einer zur Längsachse LA senkrechten Querachse QA.

Der Hauptrahmen 110 trägt eine Anzahl von, beispielsweise sechs, zumindest entlang der Längsachse LA verschieblichen Ladezinken 121, 122, 123, 124, 125, 126.

Mit Hilfe eines Fahrsystems, das eine Anzahl von, beispielsweise vier, Fahrwerken 131 umfasst, ist die Ladebrücke 100 als Ganzes verfahrbar.

Die Ladebrücke 100 umfasst eine Führungsvorrichtung 117, beispielsweise mit zumindest zwei Leitblechen, zur Führung einer Ladung (nicht dargestellt) entlang der Längsachse LA.

An einer zur Querachse QA parallelen Beladeseite 101 und einer der Beladeseite 101 gegenüberliegenden Entladeseite 102 ist jeweils ein Überfahrblech 118 an dem Hauptrahmen 110 befestigt, das auf eine Ladefläche eines Depots (nicht dargestellt) aufgelegt werden kann.

Beispielsweise an einer Längsseite der Ladebrücke 100 zwischen zwei Fahrwerken 131 sind eine Energieversorgung 170 und eine Steuervorrichtung 180 für die Ladebrücke 100 angeordnet.

Die Ladebrücke 100 umfasst eine Anzahl von, beispielsweise sechs, Schlauchaufrollern 103 (nur exemplarisch beschriftet) zum Aufrollen von Versorgungsleitungen für Zinkenhubvorrichtungen (nicht dargestellt) der Ladezinken 121, 122, 123, 124, 125, 126. Insbesondere kann für jeweils eine Zinkenhubvorrichtung eines Ladezinken 121, 122, 123, 124, 125, 126 jeweils ein Schlauchaufroller 103 vorgesehen sein.

### Fig.2

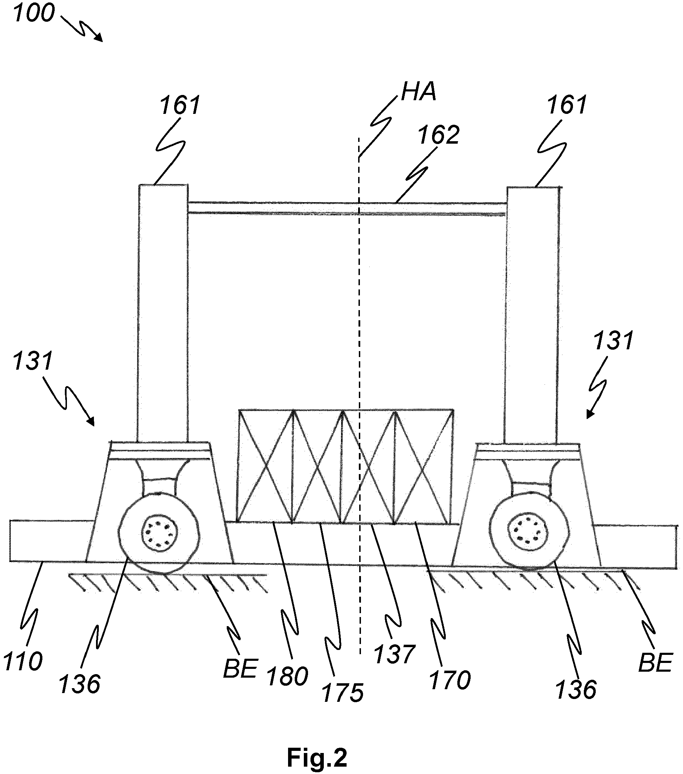

[Fig.2] zeigt eine schematische Seitenansicht entlang der Querachse einer erfindungsgemäßen Ladebrücke 100. Die Ladebrücke 100 umfasst eine Hubvorrichtung zur Höhenverstellung des Hauptrahmens 110 der Ladebrücke 100 entlang einer vertikalen Hubachse HA relativ zu dem Fahrsystem der Ladebrücke 100. Die Hubvorrichtung umfasst eine Anzahl von vertikal ausgerichteten Hubträgern 161, von denen zwei sichtbar sind, an denen der Hauptrahmen 110 höhenverstellbar ist. Zur Vertikalversteifung sind die Hubträger mit einer, beispielsweise rechteckigen, Verbindung 162, an ihrem oberen Ende miteinander verbunden.

An ihrem unteren Ende sind die Hubträger 161 mit jeweils einem Fahrwerk 131 des Fahrsystems verbunden, das über jeweils zumindest ein Rad 136 auf einer Bodenebene BE, auf der die Ladebrücke 100 verfahren werden kann, aufliegt.

Beispielsweise zwischen zwei Fahrwerken 131 sind eine Energieversorgung 170 für die Ladebrücke 100, ein Antrieb 137 für die Fahrwerke 131, eine hydraulische und/oder pneumatische Versorgung 175 und/oder eine Steuervorrichtung 180 für die Ladebrücke 100 angeordnet. Die Energieversorgung 170 umfasst beispielsweise eine Energiegewinnungsvorrichtung, insbesondere einen Generator, und einen Energiespeicher, insbesondere einen Akkumulator. Der Antrieb 137 umfasst beispielsweise einen Verbrennungsmotor und ein Getriebe. Die hydraulische und/oder pneumatische Versorgung umfasst zum Beispiel ein Hydraulikaggregat zumindest zum Betrieb der Hubvorrichtung. Die Steuervorrichtung 180 ist vorzugsweise in einem Schaltschrank witterungsgeschützt eingehaust und mit einer Fernbedienung bedienbar.

### Fig.3

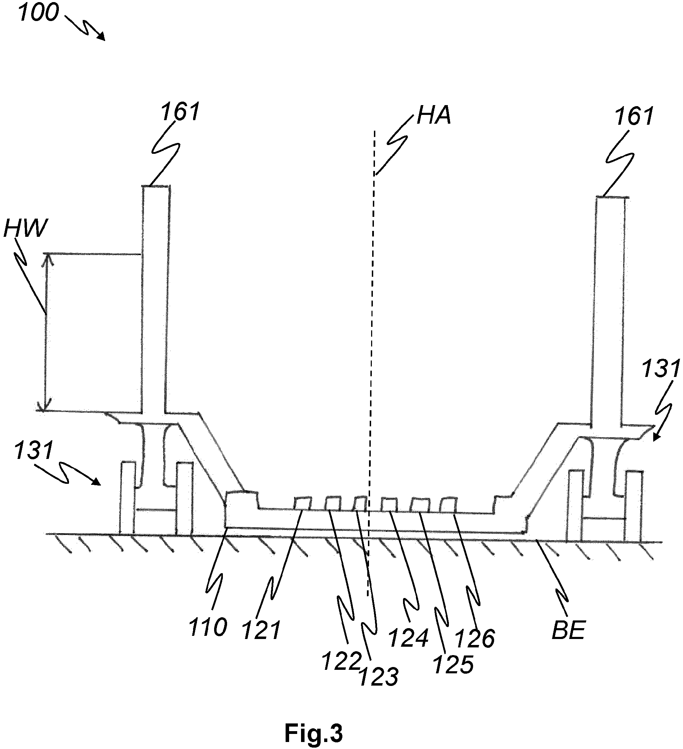

[Fig.3] zeigt eine schematische Vorderansicht entlang der Längsachse einer erfindungsgemäßen Ladebrücke 100. Zusätzlich zu den zu Figur 2 beschriebenen Merkmalen ist eine Anzahl von, beispielsweise sechs, von dem Hauptrahmen 110 getragenen Ladezinken 121, 122, 123, 124, 125, 126 sichtbar. Ferner ist ein Hubweg HW, über den der Hauptrahmen 110 an den Hubträgern 161 höhenverstellbar ist, dargestellt. Der Hubweg beträgt beispielsweise 1,7 m.

### Fig.4

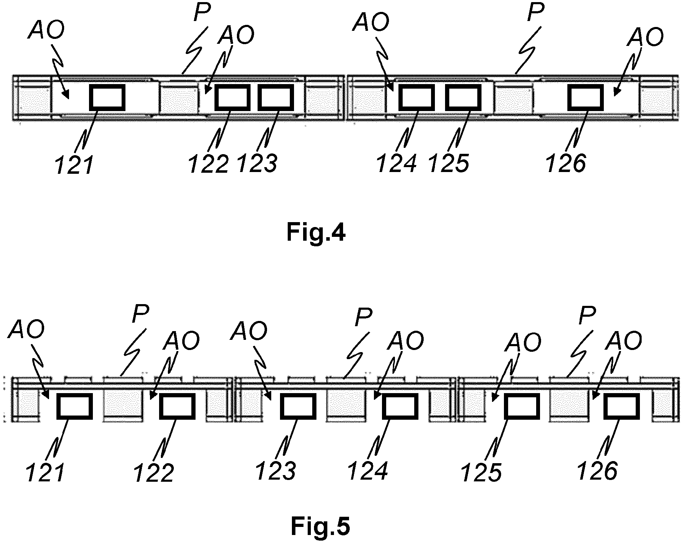

[Fig.4] zeigt eine schematische Anordnung von sechs Ladezinken 121, 122, 123, 124, 125, 126 zum Laden von zwei nebeneinander quer angeordneten Paletten P, beispielsweise Europoolpaletten. Dabei greifen in zwei längsseitige Aufnahmeöffnungen AO der Paletten P jeweils zwei Ladezinken 122, 123, 124, 125 ein, während in die beiden übrigen längsseitigen Aufnahmeöffnungen AO der Paletten P jeweils ein Ladezinken 121, 126 eingreift.

### Fig.5

[Fig.5] zeigt eine schematische Anordnung von sechs Ladezinken 121, 122, 123, 124, 125, 126 zum Laden von drei nebeneinander längs angeordneten Paletten P, beispielsweise Europoolpaletten. Dabei greift in jede der stirnseitigen Aufnahmeöffnungen AO der Paletten PA jeweils ein Ladezinken 121, 122, 123, 124, 125, 126 ein.

### Fig.6

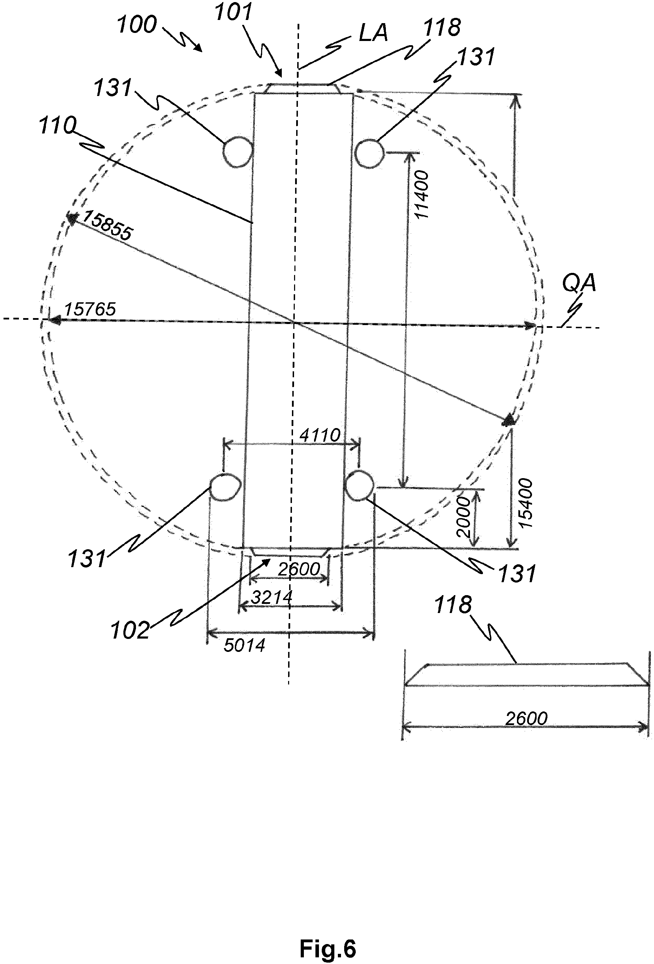

[Fig.6] zeigt Aufsicht auf eine erfindungsgemäße Ladebrücke 100. Der Übersichtlichkeit halber sind von der Ladebrücke nur der Hauptrahmen 110, die Fahrwerke 131 sowie je ein Überfahrblech 118 an der Beladeseite 101 und der Entladeseite 102 dargestellt. Das Überfahrblech 118 ist zusätzlich vergrößert dargestellt, um zu zeigen, dass an seiner der Ladebrücke abgewandten Seite, beispielsweise um 45°, abgeschrägte Ecken aufweist.

Der dargestellte Hauptrahmen 110 hat beispielsweise eine Gesamtlänge von 15 400 mm und eine Gesamtbreite von 2 600 mm, woraus sich mit beliebig drehbaren Fahrwerken 131 ein Wendekreis mit einem Durchmesser von 15 765 mm ergibt. Bei ausgeklappten Überfahrblechen 118 mit einer Länge von je 120 mm vergrößert sich der Durchmesser des Wendekreises auf 15 855 mm.

### Fig.7

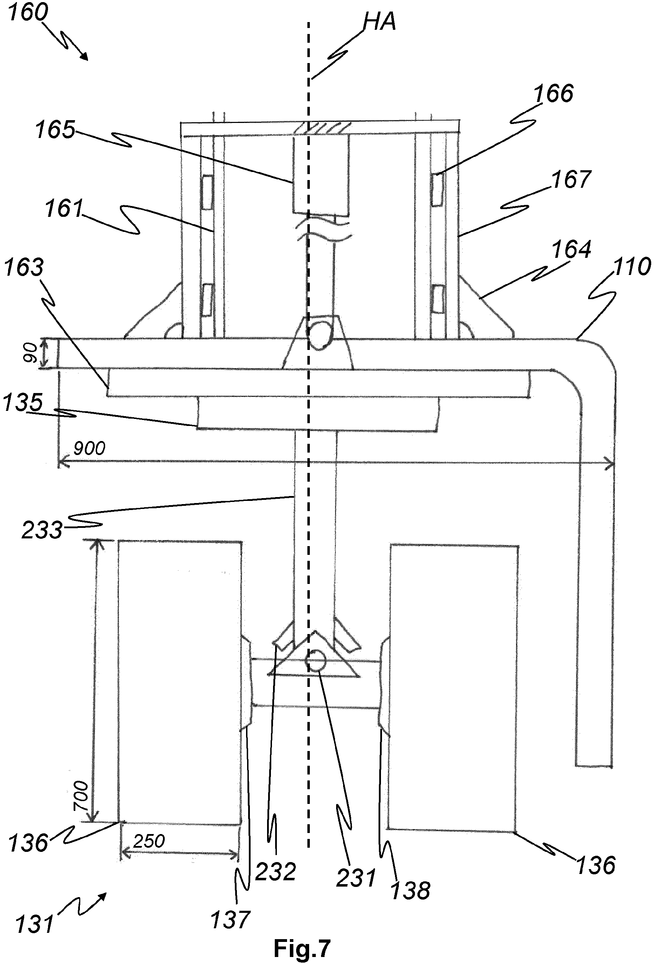

[Fig.7] zeigt eine schematische Darstellung eines Fahrwerks 131 einer erfindungsgemäßen Ladebrücke 100. Das Fahrwerk 131 umfasst zwei Räder 136, die über eine Achse 231, beispielsweise eine Pendelachse, miteinander und mit einem Standrohr 233 verbunden sind. Die Räder 136 sind beispielsweise mit schlauchlosen Schwerlastreifen bereift. Beispielsweise zumindest teilweise in den Naben der Räder 136 sind eine Antriebsvorrichtung 137, insbesondere mit einem Elektromotor, und eine Bremsvorrichtung 138, insbesondere mit einer hydraulischen und/oder elektromechanischen Bremse, angeordnet. An dem Standrohr 233 ist zumindest ein Anschlag 232 zur Begrenzung einer Pendelamplitude der Pendelachse angeordnet.

Das Standrohr 233 ist über eine Drehvorrichtung 135, zum Beispiel eine Lenkgetriebeglocke, mit einer Bodenplatte 163 eines Hubträgers 161 einer Hubvorrichtung 160 der Ladebrücke 100 verbunden.

Die Hubvorrichtung 160 umfasst einen einerseits an der Bodenplatte 163 und andererseits an einem Führungsrahmen 167 befestigten, insbesondere hydraulischen, Hubzylinder 165. Eine Anzahl von Führungsrollen 166 führt den Führungsrahmen 167 an dem Hubträger 161 entlang einer vertikalen Hubachse HA. Der Führungsrahmen 167 weist eine Anzahl von Verstärkungselementen 164, beispielsweise Knotenblechen, auf und ist an dem Hauptrahmen 110 der Ladebrücke 100 befestigt.

### Fig.8

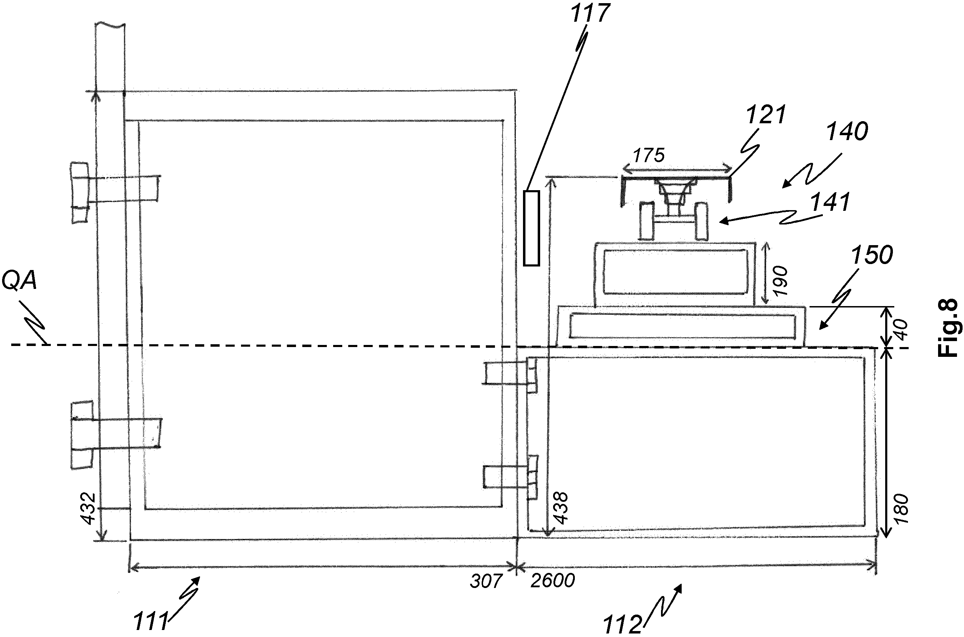

[Fig.8] zeigt eine schematische Darstellung eines Verschiebesystems 140 einer erfindungsgemäßen Ladebrücke 100. Das Verschiebesystem 140 umfasst eine Längsverschiebevorrichtung 141, beispielsweise einen Kettenantrieb, zur Verschiebung eines Ladezinken 121 entlang einer Längsachse (senkrecht zur Zeichenebene) der Ladebrücke 100. Das Verschiebesystem 140 umfasst eine, insbesondere hydraulische, Querverschiebevorrichtung 150 zur Verschiebung des Ladezinkens 121 entlang einer Querachse QA der Ladebrücke 100.

Die Querverschiebevorrichtung 150 wird von einem Querträger 112 des Hauptrahmens der Ladebrücke 100 getragen, der mit einem Längsträger 111 des Hauptrahmens verbunden ist.

Zwischen dem Ladezinken 121 und dem Längsträger 111 ist eine Führungsvorrichtung 117, beispielsweise eine Führungsschiene, zu Führung von Ladung entlang der Längsachse angeordnet.

### Fig.9

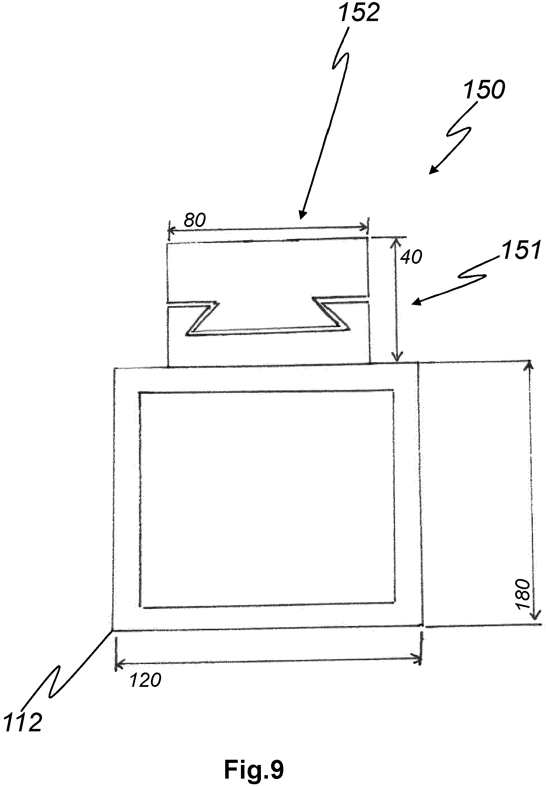

[Fig.9] zeigt einen schematischen Querschnitt einer Querverschiebevorrichtung 150 einer erfindungsgemäßen Ladebrücke 100. Die Querverschiebevorrichtung 150 umfasst eine Auflagefläche 152 für eine Längsverschiebevorrichtung (nicht dargestellt) und eine Querführung 151 zur Führung der Auflagefläche 152 entlang einer Querachse (senkrecht zur Zeichnungsebene) der Ladebrücke 100.

Die Querführung 151 ist beispielsweise als Trapezführung ausgestaltet und auf einem Querträger 112 des Hauptrahmens der Ladebrücke 100 angeordnet.

### Fig.10

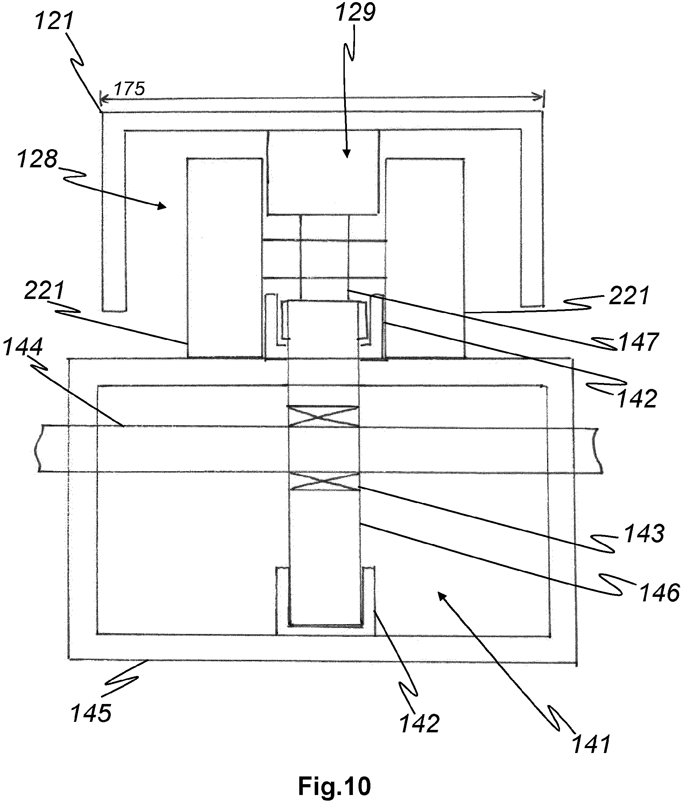

[Fig.10] zeigt einen schematischen Querschnitt einer Abstützvorrichtung 128 eines Ladezinkens 121 einer erfindungsgemäßen Ladebrücke 100. Die Abstützvorrichtung 128 umfasst eine Zinkenhubvorrichtung 129, beispielsweise einen einfachwirkenden Teleskopzylinder mit Rückholfeder, zur Höhenverstellung des Ladezinkens 121. Mit einer Anzahl von Laufrädern 221 liegt die Abstützvorrichtung 128 auf einem Auflagebalken 145 entlang einer Längsachse (senkrecht zur Zeichenebene) der Ladebrücke 100 verschieblich auf.

Figur 10 zeigt eine Längsverschiebevorrichtung 141 zur Verschiebung des Ladezinken 121 entlang der Längsachse. Die Längsverschiebvorrichtung 141 ist beispielsweise als Kettenantrieb ausgestaltet und umfasst ein über eine Antriebswelle 144 angetriebenes Kettenrad 143, das über eine von einer unteren und einer oberen Kettenführung 142 an dem Auflagebalken 145 geführte Kette 146 die Abstützvorrichtung 128 entlang der Längsachse verschiebt. Dabei können beispielsweise die Zähne eines Mitnehmers 147, insbesondere in Form eines Zahnrads oder einer Zahnstange, zur Verschiebung der Abstützvorrichtung 128 in die Kette 146 eingreifen.

### Fig.11

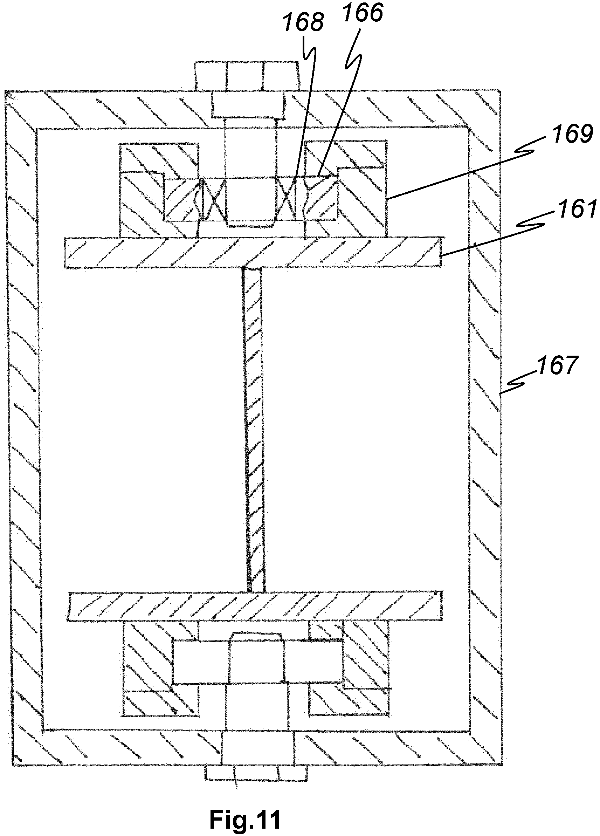

[Fig.11] zeigt einen schematischen Querschnitt durch einen Hubträger 161 einer Hubvorrichtung einer erfindungsgemäßen Ladebrücke 100. Der Hubträger ist von einem Führungsrahmen 167 zur Verbindung mit dem Hauptrahmen (nicht dargestellt) der Ladebrücke 100 umschlossen. An dem Führungsrahmen 167 ist eine Anzahl von Führungsrollen 166 über Führungslager 168, beispielsweise Nadellager, drehbar gelagert. Die Führungsrollen 166 sind durch an dem Hubträger 161 befestigte, beispielsweise mit 45°-Schweißnähten verschweißte, L-Führungen 169, an dem Hubträger 161 entlang einer Hubachse (senkrecht zur Zeichenebene) geführt.

### Fig.12

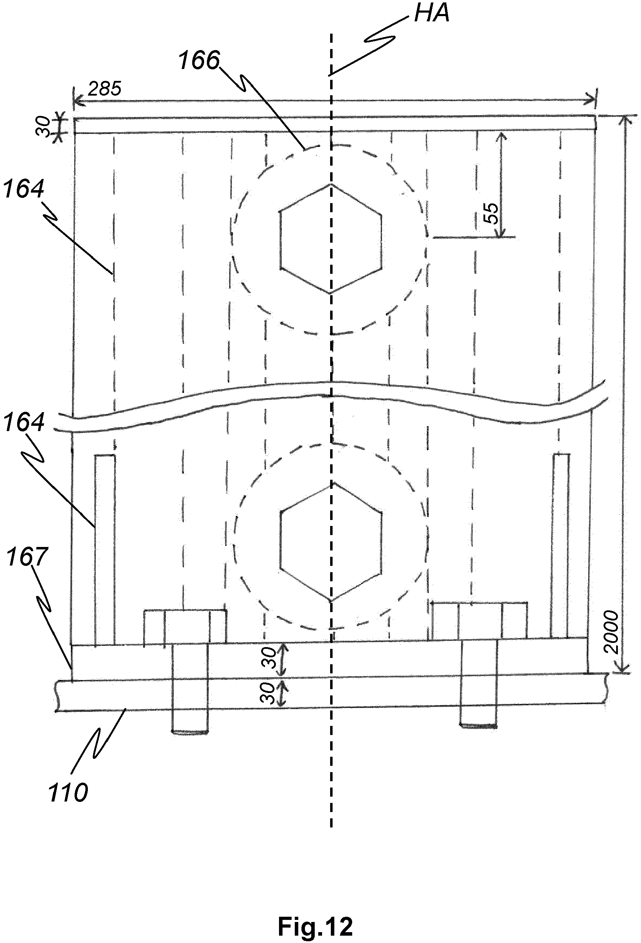

[Fig.12] zeigt eine schematische Seitenansicht eines Führungsrahmens 167 einer Hubvorrichtung einer erfindungsgemäßen Ladebrücke 100. Der Führungsrahmen 167 umfasst eine Anzahl von Verstärkungselementen 164, insbesondere Verstärkungsrippen (gestrichelt dargestellt) und Knotenbleche. Der Führungsrahmen 167 ist mit dem Hauptrahmen 110 der Ladebrücke 100 starr verbunden, beispielsweise verschraubt.

### Fig.13

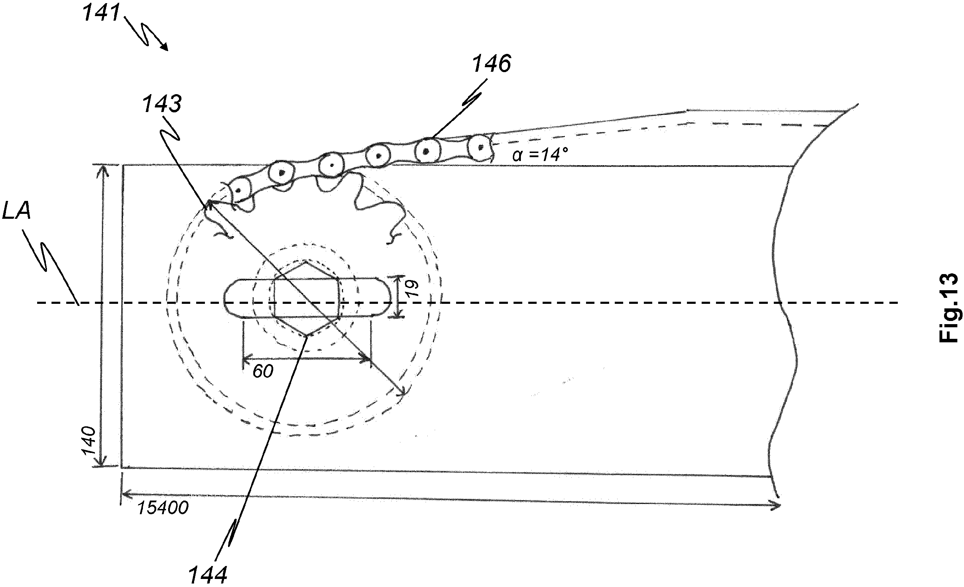

[Fig.13] zeigt eine schematische Seitenansicht einer Längsverschiebevorrichtung 141 einer erfindungsgemäßen Ladebrücke 100. Die Längsverschiebevorrichtung 141 ist als Kettenantrieb ausgestaltet und umfasst eine Antriebswelle 144 (senkrecht zur Zeichenebene) die über ein Kettenrad 143 eine Kette 146 zur Verschiebung eines Ladezinkens (nicht dargestellt) entlang einer Längsachse LA der Ladebrücke 100 antreibt.

### Fig.14

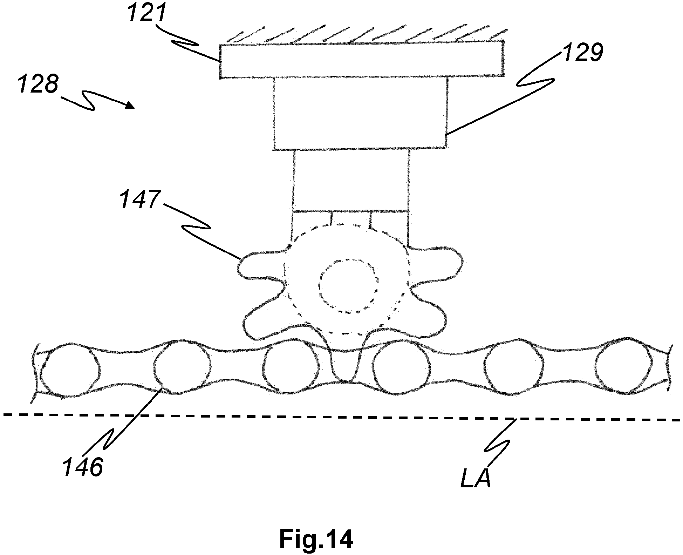

[Fig.14] zeigt eine schematische Seitenansicht einer Abstützvorrichtung 128 eines Ladezinkens 121 einer erfindungsgemäßen Ladebrücke 100. Der Ladezinken 121 ist von einer Zinkenhubvorrichtung 129, beispielsweise einem Teleskopzylinder, höhenverstellbar unterstützt. Die Abstützvorrichtung 128 umfasst einen Mitnehmer 147, beispielsweise einen Zahnradsektor, mit dem die Abstützvorrichtung 128 zur Verschiebung entlang einer Längsachse LA der Ladebrücke 100 mit einer Längsverschiebevorrichtung, insbesondere mit einer Kette 146, verbunden ist.

### Fig.15

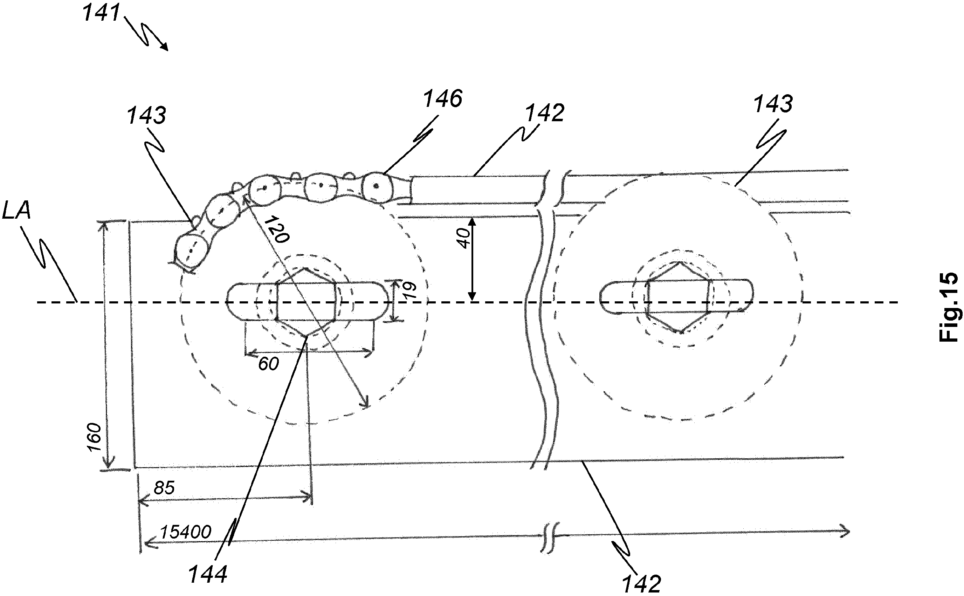

[Fig.15] zeigt eine schematische Seitenansicht einer als Kettenantrieb ausgestalteten Längsverschiebevorrichtung 141 einer erfindungsgemäßen Ladebrücke 100. Zusätzlich zu den in Figur 13 gezeigten Merkmalen sind hier eine obere und eine untere Kettenführung 142 sowie ein weiteres Kettenrad 143 dargestellt.

### Fig.16

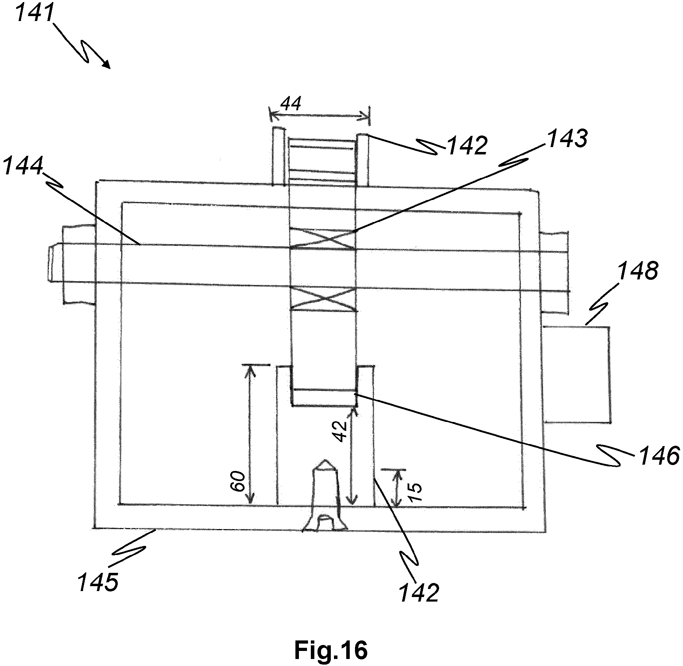

[Fig.16] zeigt einen schematischen Querschnitt einer als Kettenantrieb ausgestalteten Längsverschiebevorrichtung 141 einer erfindungsgemäßen Ladebrücke 100. Zusätzlich zu den in Figur 10 dargestellten Merkmalen der Längsverschiebevorrichtung 141 ist hier ein, beispielsweise elektromechanischer, Kettenantrieb 148 gezeigt, der die Kette 146 über die Antriebswelle 144 und das Kettenrad 143 antreibt.

### Fig.17

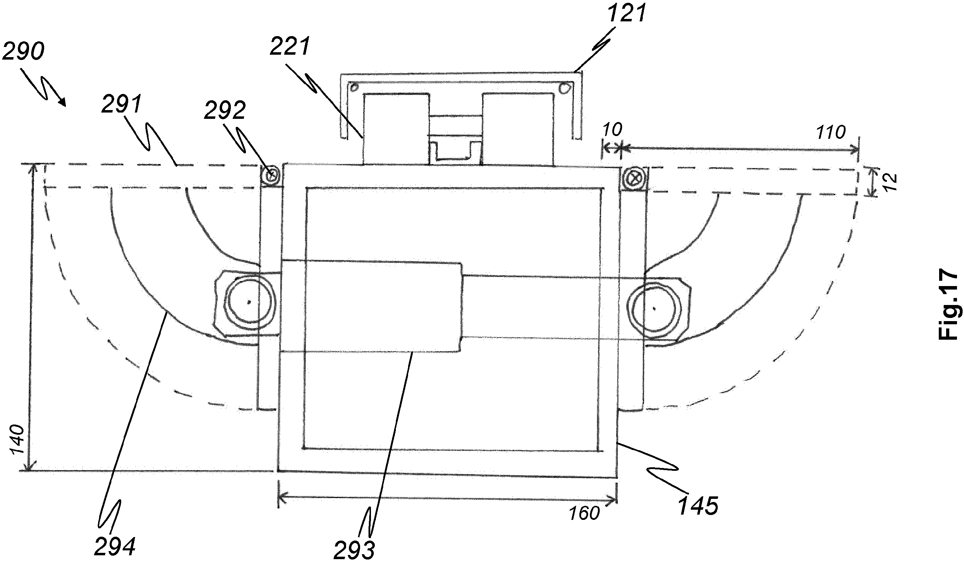

[Fig.17] zeigt einen schematischen Querschnitt einer Stützvorrichtung 290 für die Ladung (nicht dargestellt) einer erfindungsgemäßen Ladebrücke 100, insbesondere für Paletten. Die Stützvorrichtung 290 ist in einen Auflagebalken 145, auf dem ein Ladezinken 121 über eine Anzahl von Laufrädern 221 aufliegt, integriert. Die Stützvorrichtung 290 umfasst beidseits des Auflagebalkens 145 jeweils ein Flacheisen 291, das über jeweils ein Scharnier 292 mit dem Auflagebalken 145 verbunden ist.

Mit Hilfe eines hydraulischen oder pneumatischen, insbesondere einfachwirkenden, Druckzylinders 293 und zweier Druckblechbögen 294 können die Flacheisen 291 aus einer an dem Auflagebalken 145 anliegenden Ruhestellung (in durchgezogenen Linien dargestellt) in eine zu dem Auflagebalken 145 senkrechten Stützstellung (gestrichelt dargestellt) zur Unterstützung der Ladung (nicht dargestellt), insbesondere der Stützfüße einer Palette, ausgeklappt werden.

### Fig.18

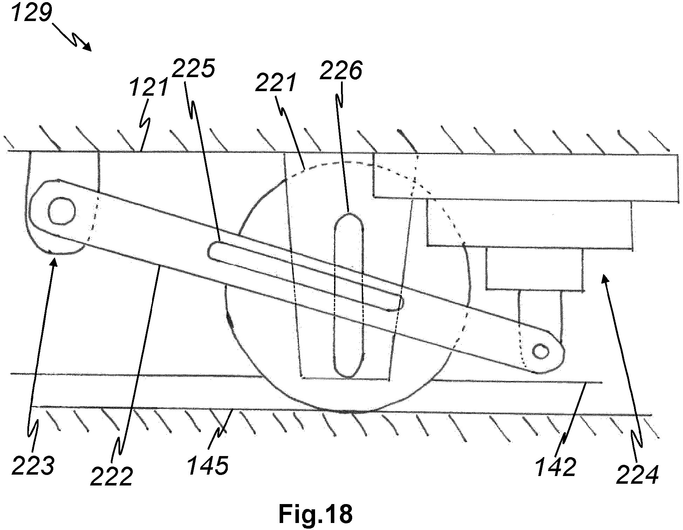

[Fig.18] zeigt schematisch eine beispielhafte Ausgestaltung einer Zinkenhubvorrichtung 129. Die Zinkenhubvorrichtung 129 dient dazu, einen vertikalen Abstand zwischen einem Ladezinken 121 und einem Auflagebalken 145, auf dem der Ladezinken 121 mit zumindest einem Laufrad 221 entlang einer Kettenführung 142 horizontal verschieblich gelagert ist, einzustellen, wie es auch zu Figur 10 und zu Figur 14 beschrieben ist.

Die Zinkenhubvorrichtung 129 umfasst beispielsweise einen Hebel 222, der an einem Ende über einen Drehpunkt 223 und an seinem anderen Ende über einen Teleskopzylinder 224, der beispielsweise mit einer Gummimembran oder einem Druckbalg umschlossen sein kann, mit dem Ladezinken 121 verbunden ist. Mit Hilfe des Teleskopzylinders 224, der beispielsweise zur Ausübung einer Kraft von 2500 N ausgelegt ist, kann ein Neigungswinkel zwischen dem Hebel 222 und dem Ladezinken 121 eingestellt werden.

Das Laufrad 221 ist über eine Vertikalführung 226 an dem Ladezinken 121 und über eine Kulissenführung 225 an dem Hebel 222 geführt. Daher kann durch die durch den Teleskopzylinder 224 eingestellte Neigung des Hebels 222 eine Vertikalposition des Laufrads 221 in der Vertikalführung 226 und somit der vertikale Abstand zwischen dem Ladezinken 121 und dem Auflagebalken 145 eingestellt werden.

### Fig.19

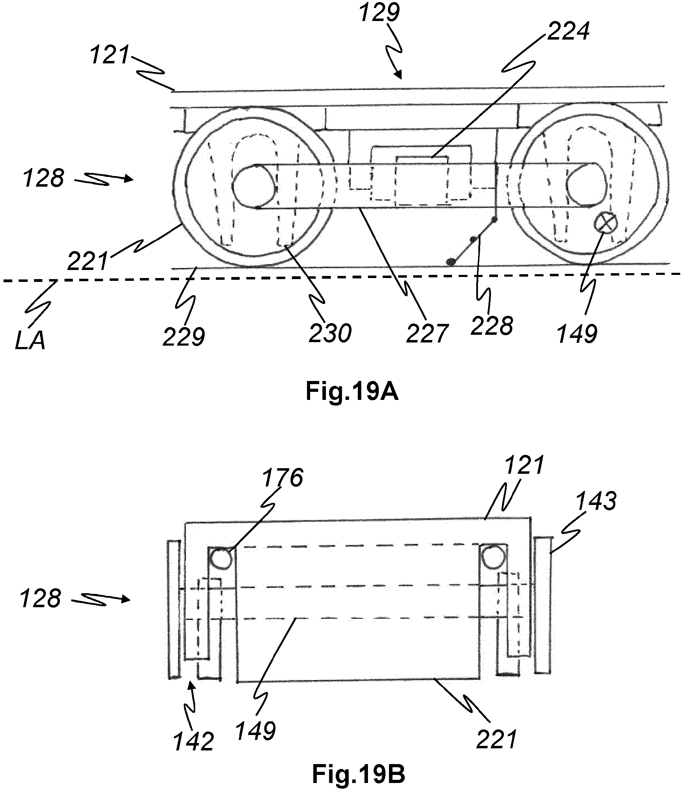

[Fig.19] zeigt eine schematische Seitansicht (Fig.19A) und Frontansicht (Fig. 19B) einer beispielhaften Ausgestaltung einer Abstützvorrichtung 128 eines Ladzinkens 121 mit einer Anzahl von Laufrädern 221, die beispielsweise als Doppellaufwerk angeordnet sind.

Die Achsen der Laufräder 221 des Doppellaufwerks sind vorzugsweise durch ein horizontales Verbindungsstück 227 verbunden. An dem Verbindungsstück 227 kann eine Zinkenhubvorrichtung 129, beispielsweise mit einem Teleskopzylinder 224, für die vertikale Hubbewegung des Ladezinkens 121 angeordnet sein.

Die Laufräder 221 umfassen beispielsweise jeweils einen Motor 149, insbesondere einen Radnabenmotor, welcher als Längsverschiebevorrichtung eine horizontale Verschiebung des Ladezinkens 121 entlang der Längsachse LA ermöglicht.

Zur Energieversorgung des Radnabenmotors können an der Abstützvorrichtung 128 mindestens zwei Schleifkontakte 228 angebracht sein, die mit jeweils einer Stromschiene 229 am Hauptrahmen 110 der Ladebrücke 100 verbunden sind.

Die Laufräder 221 sind beispielsweise an den beiden U-Schenkeln des Ladezinkens 121 mit nach unten offenem U-Förmigen Profil in einer beweglichen, insbesondere teleskopierbaren, Schwalbenschwanzführung 230 gelagert.

In den beiden oberen Winkeln des U-Profils können Versorgungsleitungen 176 zur Energieübertragung und/oder Steuersignalübertragung integriert sein.

An den Außenschenkeln des U-Profils ein Kettenrad 143 und eine Kettenführung 142 angebracht sein. Diese dienen vorteilhafterweise dazu, dem Ladezinken 121 bei einer Längsverschiebung entlang der Längsachse LA das Überfahren von Querlatten umzuladender Paletten zu ermöglichen.

### Fig.20

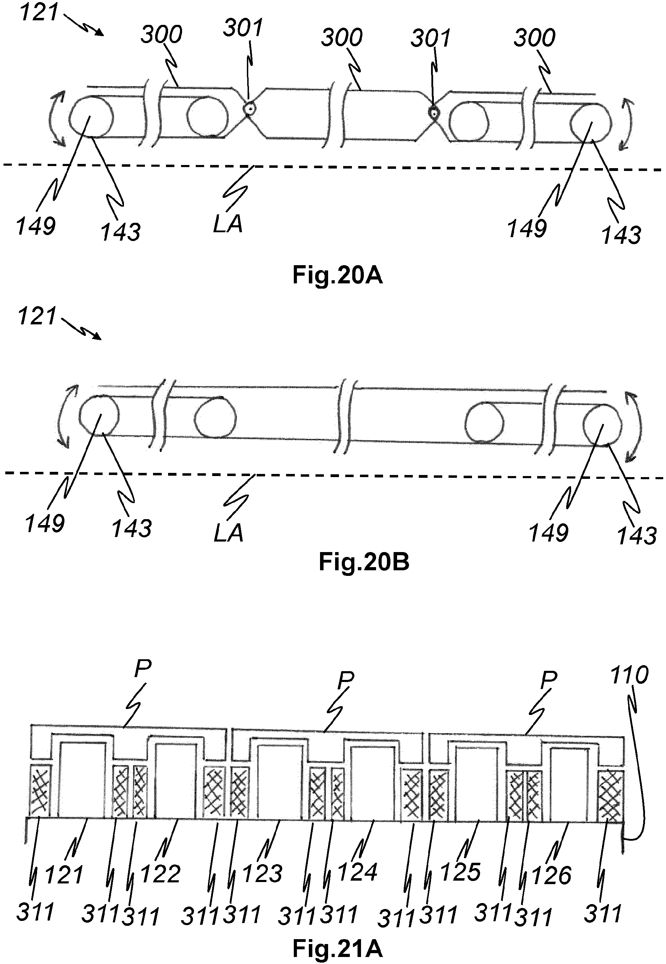

[Fig.20] zeigt schematisch beispielhafte Ausgestaltungen eines Ladzinkens 121. Der Ladezinken 121 kann beispielsweise eine Mehrzahl von entlang der Längsachse LA hintereinander angeordneten und durch Knickgelenke 301 um eine horizontale Querachse (senkrecht zur Zeichenebene) drehbar miteinander verbundenen Sektionen 300 umfassen (Fig.20A) oder einstückig ausgebildet sein (Fig.20B).

Der Ladezinken 121 kann beispielsweis drei Sektionen 300, zum Beispiel mit jeweils 5 m Länge entlang der Längsachse LA umfassen und/oder eine Gesamtlänge entlang der Längsachse von 15 m aufweisen.

Beispielsweise eine entlang der Längsachse erste und/oder letzte Sektion 300 kann jeweils einen Motor 149 als Längsverschiebevorrichtung zur Längsverschiebung des Ladezinkens 121 umfassen. Der Motor 149 kann im Untergurt eines nach unten offenen U-förmigen Profils des Ladezinkens 121 angebracht sein und beispielsweise mittels einer Kette (nicht gezeigt) und eines Kettenrads 143 die Längsverschiebung des Ladezinkens 121 ermöglichen.

### Fig.21

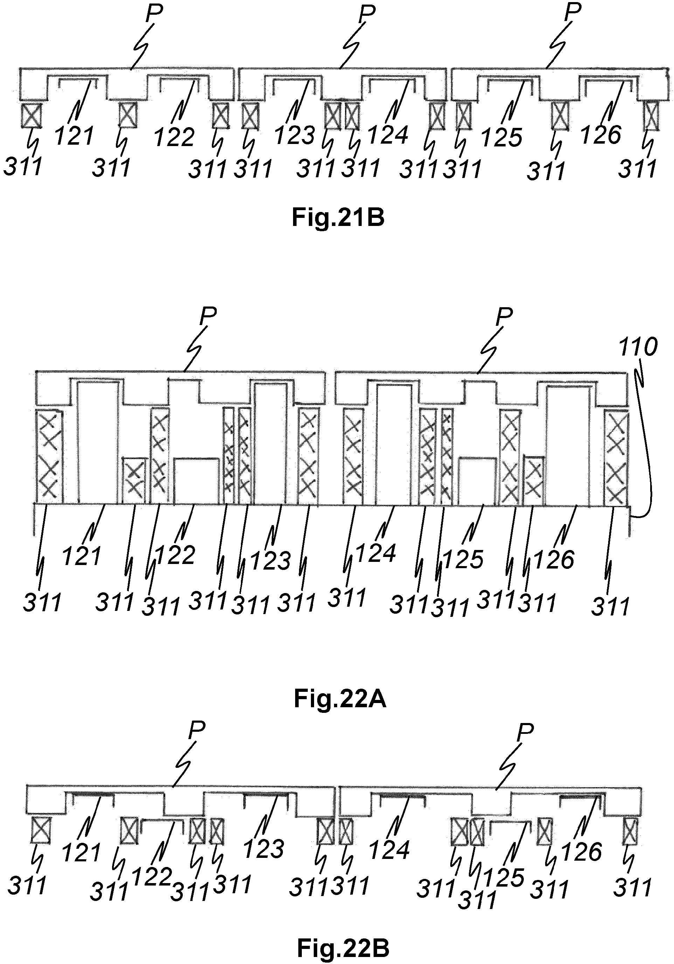

[Fig.21] zeigt schematisch eine beispielhafte Anordnung von Ladzinken 121, 122, 123, 124, 125, 126 zur Aufnahme von drei längs der Ladezinken 121, 122, 123, 124, 125, 126 angeordneten Paletten P, beispielsweise Europoolpaletten.

Die Ladezinken 121, 122, 123, 124, 125, 126 sind beispielsweise auf dem Hauptrahmen 110 einer erfindungsgemäßen Ladebrücke 100 parallel zur Längsachse (senkrecht zur Zeichenebene) der Ladebrücke 100 angeordnet.

Quer zur Längsachse neben den Ladezinken 121, 122, 123, 124, 125, 126 sind beispielsweise jeweils zwei Kettenförderer 311 (Fig. 21A) als Ladungsverschiebesystem zur Verschiebung von Ladung auf dem jeweiligen Ladezinken 121, 122, 123, 124, 125, 126 entlang der Längsachse angeordnet. Die Kettenförderer 311 sind vorzugsweise jeweils unter den Stützfüßen der Paletten auf dem Hauptrahmen 110 angeordnet und beispielsweise durch jeweils einen integrierten hydrodynamischen Kompaktantrieb angetrieben.

Zwischen benachbarten Ladezinken kann 121, 122, 123, 124, 125, 126 auch jeweils nur ein Kettenförderer311 angeordnet sein, sodass die Anzahl der Kettenförderer 311 beispielsweise zehn betragen kann (Fig. 21B).

Die Ladezinken 121, 122, 123, 124, 125, 126 umfassen beispielsweise jeweils ein Rechteckprofil oder ein U-Profil, insbesondere mit integrierten Laufrollen und/oder einer Zinkenhubvorrichtung (nicht dargestellt) zur vertikalen Verschiebung der Ladezinken 121, 122, 123, 124, 125, 126 gegenüber dem Hauptrahmen 110.

### Fig.22

[Fig.22] zeigt schematisch beispielhafte Anordnungen von Ladzinken 121, 122, 123, 124, 125, 126 zur Aufnahme von zwei quer zu den Ladezinken 121, 122, 123, 124, 125, 126 angeordneten Paletten P, beispielsweise Europoolpaletten.

Ausgehend von der in Fig.21A und Fig.21B dargestellten Anordnungen können die in Fig.22A und Fig.22B dargestellte Anordnungen wie folgt erreicht werden:

Die Ladzinken 121, 122, 123, 124, 125, 126 werden mit den zugehörigen Kettenförderern 311 horizontal (beispielsweise hydraulisch, pneumatisch und/oder elektromechanisch) entlang der Querachse QA der Ladebrücke so positioniert, dass der erste Ladezinken 121, der dritte Ladezinken 123, der vierte Ladezinken 124 und der sechste Ladezinken 126 jeweils unter einer seitlichen Aufnahmeöffnung einer Palette P befinden.

Die Kettenförderer 311 werden, insbesondere mit Ausnahme der inneren Kettenförderer 311 des ersten Ladezinkens 121 und des sechsten Ladezinkens 126 (Fig.22A), vertikal, beispielsweise um ca. 150 mm nach oben verfahren.

Alternativ kann die Ladebrücke 10 ohne die inneren Kettenförderer 311 des ersten Ladezinkens 121 und des sechsten Ladezinkens 126 ausgestaltet sein (Fig.22B), also nur zehn anstelle der in Fig.22A dargestellten zwölf Kettenförderer 311 umfassen. Dadurch wird Bauraum gespart und die Steuerung vereinfacht, da alle zehn Kettenförderer 311 gemeinsam nach oben verfahren werden können.

Der erste Ladezinken 121, der dritte Ladezinken 123, der vierte Ladezinken 124 und der sechste Ladezinken 126 werden ebenfalls vertikal, beispielsweise um ca. 150 mm, nach oben verfahren.

Daraufhin können die Paletten P mit Hilfe der Zinkenhubvorrichtungen des ersten Ladezinkens 121, des dritten Ladezinken 123, des vierten Ladezinkens 124 und des sechsten Ladezinkens 126 angehoben werden, um einen Freilauf der Paletten P zu ermöglichen, damit das Ladegut mit Hilfe der Kettenförderer 311 entlang der Längsachse (senkrecht zur Zeichenebene) der Ladebrücke von der Beladeseite zur Entladeseite verfahren und durchgeschaltet werden kann.

### Fig.23

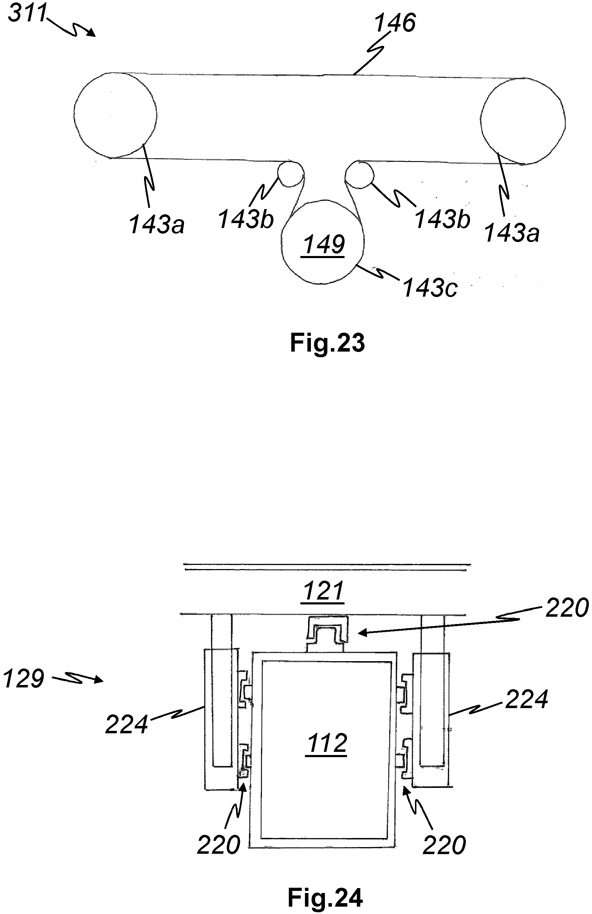

[Fig.23] zeigt schematisch eine beispielhafte Ausgestaltung eines Kettenförderers 311 eines Ladeverschiebungssystems 310, wie es beispielsweise in Fig.21 oder Fig.22 gezeigt ist. Der Kettenförderer 311 ist beispielsweise als Simplex oder Duplex-Kettenförderer ausgeführt und insbesondere in einem rechteckigen Vierkantrohrprofil integriert, vorzugsweise mit einer maximalen Breite von 60 mm, oder nur in Simplexausführung bei einem Doppel-T Profil.

Eine Kette 146 des Kettenförderers 311 wird beispielsweise durch eine Anzahl von Kettenrädern 143 geführt, umgelenkt (Kettenräder 143a) und gespannt (Kettenräder 143b), eines der Kettenräder kann als Kettenantriebsrad 143c ausgestaltet sein, das beispielsweise mit einem Motor 149, beispielsweise einem Elektromotor oder einem hydrostatischen Antrieb, insbesondere einem kompakt-hydrostatischen Antrieb, insbesondere über ein Getriebe, angetrieben wird.

Der Kettenförderer 311 umfasst vorzugsweise einen vertikalen Verlängerungsschaft und ist vorzugsweise als Omegaantrieb ausgelegt. Bei mehreren entlang der Querachse der Ladebrücke nebeneinander angeordneten Kettenförderern 311 sind deren Kettenantriebsräder 143c vorzugsweise entlang der Längsachse der Ladebrücke gegeneinander versetzt, sodass es bei einer Parallelverschiebung der Kettenförderer 311 zu keiner Kollision der Kettenförderer 311 kommt. Dabei ist vorzugsweise die jeweilige Vertikalverschiebung berücksichtigt.

### Fig.24

[Fig.24] zeigt schematisch eine beispielhafte Ausgestaltung einer Zinkenhubvorrichtung 129 zur Vertikalverschiebung eines Ladezinkens 121 gegenüber einem Querträger 112 des Hauptrahmens der Ladebrücke.

Die Zinkenhubvorrichtung 129 umfasst beispielsweise eine Anzahl von, insbesondere zwei, an dem Querträger 112 angebrachten Teleskopzylindern 224, die zum Beispiel jeweils zwei vertikal teleskopierbar ineinander geführte Vierkantrohre, von denen jeweils eines mit dem Querträger 112 und das andere mit dem Ladezinken 121 verbunden ist.

Die Teleskopzylinder 224 und/oder der Ladezinken 121 sind vorzugsweise durch jeweils eine Horizontalführung 220, beispielsweise eine Prismenführung, entlang der Querachse (senkrecht zur Zeichenebene) der Ladebrücke verschieblich an dem Querträger 112 geführt. Dadurch kann der Ladezinken 121, beispielsweise mit Hilfe eines Zahnstangengetriebes und/oder eines Hydraulikzylinders, gegenüber dem Querträger 112 entlang der Querachse verschoben werden.

Eine Hubvorrichtung zur Vertikalverschiebung eines Ladungsverschiebesystems 310, insbesondere eines Kettenförderers 311, gegenüber einem Querträger 112 des Hauptrahmens der Ladebrücke kann analog zur hier gezeigten Zinkenhubvorrichtung 129 ausgestaltet sein.

### Fig.25

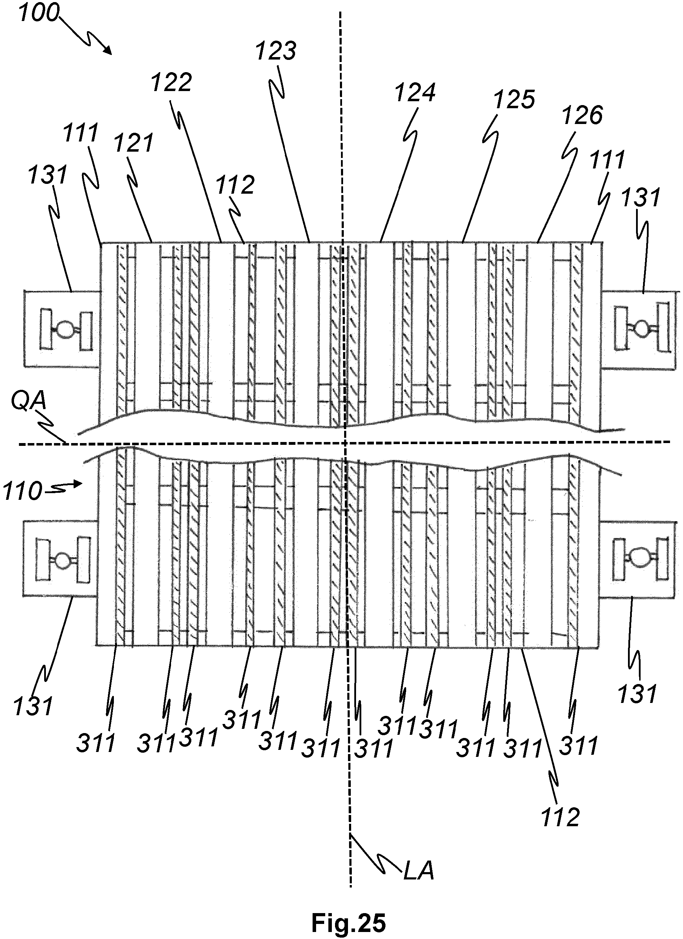

[Fig.25] zeigt eine schematische Aufsicht auf eine erfindungsgemäße Ladebrücke 100.

Die Ladebrücke 100 umfasst eine Mehrzahl von, beispielsweise vier, außenliegenden, insbesondere synchron gesteuerten, Fahrwerken 131.

Die Ladebrücke 100 umfasst einen Hauptrahmen 110 mit einer Anzahl von entlang einer Längsachse LA der Ladebrücke 100 ausgerichteten Längsträgern 111, die über entlang einer zu der Längsachse LA orthogonalen Querachse QA ausgerichtete Querträger 112 miteinander verbunden sind.

Auf dem Hauptrahmen 110 ist eine Mehrzahl von, beispielsweise zwölf, Kettenförderern 311 angeordnet, die eine Ladung, insbesondere die Stützfüße von Paletten, entlang der Längsachse LA über den Hauptrahmen 110 transportieren und von einer Beladeseite 101 zu einer dazu gegenüberliegenden Entladeseite 102 durchschalten können.

Die Ladebrücke 100 umfasst eine Mehrzahl von, beispielsweise sechs, entlang der Längsachse LA ausgerichteten Ladezinken 121, 122, 123, 124, 125, 126 zur Aufnahme der Ladung, die insbesondere jeweils zwischen zwei Kettenförderern 311 angeordnet sein können.

Zwischen benachbarten Ladezinken 121, 122, 123, 124, 125, 126 und Kettenförderern 311 ist entlang der Querachse QA jeweils ein Freiabstand vorgesehen, um die Kettenförderer 311 und die Ladezinken 121, 122, 123, 124, 125, 126 entlang der Querachse QA parallel zueinander verschieben zu können.

### Fig.26

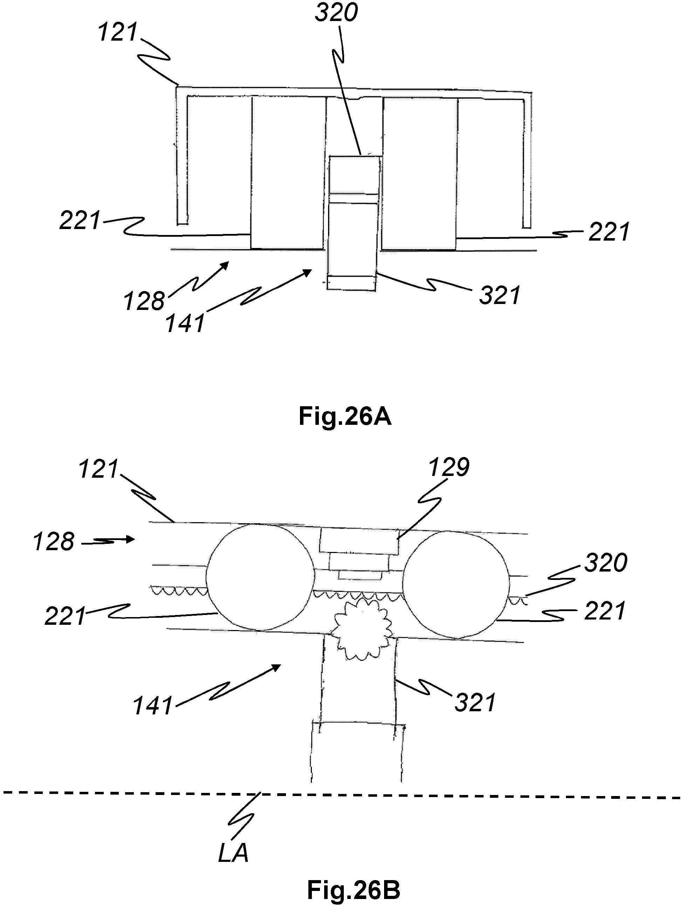

[Fig.26] zeigt einen schematischen Querschnitt (Fig.26A) und Längsschnitt (Fig.26B) einer Abstützvorrichtung 128 eines Ladezinkens 121 einer erfindungsgemäßen Ladebrücke 100. Die Abstützvorrichtung 128 umfasst eine Zinkenhubvorrichtung 129 zur Höhenverstellung des Ladezinkens 121. Mit einer Anzahl von Laufrädern 221 liegt die Abstützvorrichtung 128 auf einem Längsträger 111 des Hauptrahmens 110 der Ladebrücke 100 entlang der Längsachse LA (in Fig.26A senkrecht zur Zeichenebene) der Ladebrücke 100 verschieblich auf.

Figur 26 zeigt eine Längsverschiebevorrichtung 141 zur Verschiebung des Ladezinken 121 entlang der Längsachse LA. Die Längsverschiebvorrichtung 141 umfasst beispielsweise eine Profilzahnstange 320, die mit den Drehachsen der Laufräder 221 verbunden ist. Somit können, insbesondere bei Querpalettentransport, mehrere vertikal geführte Stößelantriebe 321 übergreifend (analog einer Sinuslinie) durch Ein- und Ausfahren unter Umgehung einer Querlattung der Paletten in den jeweiligen freien Feldern der Paletten dynamisch in die Profilzahnstange 320 eingreifen und so die Längsverschiebung des Ladezinkens 121 bewirken.

### Fig.27

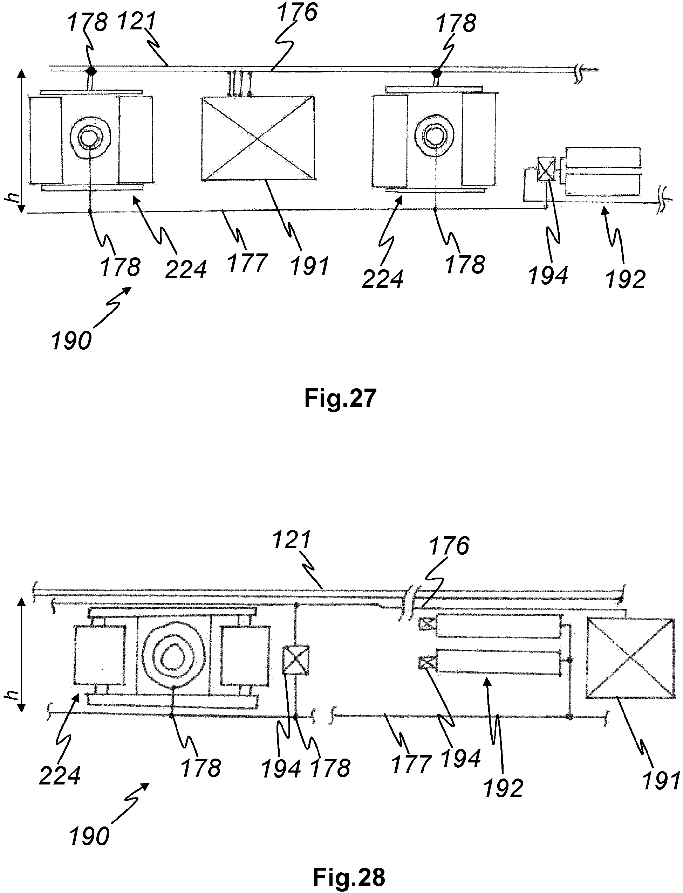

[Fig.27] zeigt eine schematische Seitansicht von Komponenten der Antriebstechnik 190 des Verschiebesystems 140 einer erfindungsgemäßen Ladebrücke 100.

Die dargestellten Komponenten der Antriebstechnik 190 des Verschiebesystems 140, umfassend beispielsweise eine Leistungselektronik 191, einen Verdichter 192, beispielsweise einen Tandemachsialmagnetkolbenverdichter, eine Versorgungsleitung 176 zur Energie- und/oder Steuersignalübertragung, eine Hochdruckleitung 177, insbesondere mit T-Stückverbindungen 178, zur Übertragung von Energie an Teleskopzylinder 224 der Zinkenhubvorrichtung 129, ein Magnetventil 194, zumindest einen Teleskopzylinder 224 der Zinkenhubvorrichtung 129, sind vorzugsweise im Untergurt eines Ladezinkens 121 angeordnet, damit das Verschiebesystem 140 möglichst wenig Bauraum beansprucht.

Eine Bauhöhe h der Antriebstechnik ist vorzugsweise von 50 mm bis 100 mm, beispielsweise ca. 63 mm. Die Versorgungsleitung 176 kann beispielsweise durchgängig mit jeweils einer T-Stückverbindung 178 an die jeweiligen Verbraucher angebunden ein. Die Versorgungsleitung 176 ist vorzugsweise in einem oder in beiden oberen Winkeln eines Ladezinkens 121 mit U-förmigem nach unten offenen Profil angeordnet.

### Fig.28

[Fig.28] zeigt eine weitere schematische Seitansicht von Komponenten der Antriebstechnik 190 des Verschiebesystems 140 einer erfindungsgemäßen Ladebrücke 100.

Einander entsprechende Komponenten sind mit den gleichen Bezugszeichen wie in Figur 27 versehen und können ebenso wie zu Figur 27 beschrieben ausgestaltet sein.

Wie in Figur 27 sind die dargestellten Komponenten auch in Figur 28 platzsparend im Untergurt eines Ladezinkens 121 angeordnet.

### Liste der Bezugszeichen]

- 100: Ladebrücke
- 101: Beladeseite
- 102: Entladeseite
- 103: Schlauchaufroller
- 110: Hauptrahmen
- 111: Längsträger
- 112: Querträger
- 117: Führungsvorrichtung
- 118: Überfahrblech
- 120: Ladefläche
- 121: erster Ladezinken
- 122: zweiter Ladezinken
- 123: dritter Ladezinken
- 124: vierter Ladezinken
- 125: fünfter Ladezinken
- 126: sechster Ladezinken
- 128: Abstützvorrichtung
- 129: Zinkenhubvorrichtung
- 131: Fahrwerk
- 135: Drehvorrichtung
- 136: Rad
- 137: Antriebsvorrichtung
- 138: Bremsvorrichtung
- 140: Verschiebesystem
- 141: Längsverschiebevorrichtung
- 142: Kettenführung
- 143: Kettenrad
- 144: Antriebswelle
- 145: Auflagebalken
- 146: Kette
- 147: Mitnehmer
- 148: Kettenantrieb
- 149: Motor
- 150: Querverschiebevorrichtung
- 151: Querführung
- 152: Auflagefläche
- 160: Hubvorrichtung
- 161: Hubträger
- 162: Verbindung
- 163: Bodenplatte
- 164: Verstärkungselement
- 165: Hubzylinder
- 166: Führungsrolle
- 167: Führungsrahmen
- 168: Führungslager
- 169: L-Führung
- 170: Energieversorgung
- 171: Energiespeicher
- 172: Energiegewinnungsvorrichtung
- 175: hydraulische und/oder pneumatische Versorgung
- 176: Versorgungsleitung
- 180: Steuervorrichtung
- 220: Horizontalführung
- 221: Laufrad
- 222: Hebel
- 223: Drehpunkt
- 224: Teleskopzylinder
- 225: Kulissenführung
- 226: Vertikalführung
- 227: Verbindungsstück
- 228: Schleifkontakt
- 229: Stromschiene
- 230: Schwalbenschwanzführung
- 231: Achse
- 232: Anschlag
- 233: Standrohr
- 290: Stützvorrichtung
- 291: Flacheisen
- 292: Scharnier
- 293: Druckzylinder
- 294: Druckblech
- 300: Sektion
- 301: Knickgelenk
- 310: Ladungsverschiebesystem
- 311: Kettenförderer
- 320: Profilzahnstange
- 321: Stößelantrieb
- AO: Aufnahmeöffnung
- BE: Bodenebene
- HA: Hubachse
- HW: Hubweg
- LA: Längsachse
- P: Palette
- QA: Querachse

## Patentansprüche

1. Ladebrücke (100) zum Umladen einer Ladung zwischen zwei voneinander beabstandeten Depots mit einem Hauptrahmen (110), die Ladebrücke (100) umfassend
a) eine Anzahl von parallel zu einer horizontalen Längsachse (LA) der Ladebrücke (100) angeordneten und von dem Hauptrahmen (110) getragenen Ladezinken (121, 122, 123, 124, 125, 126) zur Aufnahme der Ladung und
b) zumindest ein Verschiebesystem (140) zumindest zur Verschiebung der Ladezinken (121, 122, 123, 124, 125, 126) entlang der Längsachse (LA) an einer Beladeseite (101) und an einer der Beladeseite (101) gegenüberliegenden Entladeseite (102) der Ladebrücke (100) über die Ladebrücke (110) hinaus,
c) wobei das Verschiebesystem (140) zumindest eine Zinkenhubvorrichtung (129) zur Verschiebung zumindest eines der Ladezinken (121, 122, 123, 124, 125, 126) entlang einer vertikalen Hubachse (HA) relativ zu dem Hauptrahmen (110) umfasst, **dadurch gekennzeichnet, dass**
d) die Ladebrücke (100) ein den Hauptrahmen (110) tragendes Fahrsystem (130) mit einer Anzahl von Fahrwerken (131) zum Verfahren der Ladebrücke (100) zumindest entlang der Längsachse (LA) und entlang einer zur Längsachse (LA) senkrechten, horizontalen Querachse (QA) umfasst.

2. Ladebrücke (100) nach Anspruch 1,
**dadurch gekennzeichnet, dass**
die Ladezinken (121, 122, 123, 124, 125, 126) zur gleichzeitigen Aufnahme einer Mehrzahl von standardisierten Paletten ausgelegt sind, wobei
a) die Ladebrücke (100) eine gerade Anzahl von Ladezinken (121, 122, 123, 124, 125, 126) umfasst;
b) die Ladezinken (121, 122, 123, 124, 125, 126) an der Beladeseite (101) und der Entladeseite (102) jeweils mindestens um das Sechsfache der Länge einer der Paletten über die Ladebrücke (110) hinaus verschiebbar sind;
c) eine horizontale Breite zumindest eines der Ladezinken (121, 122, 123, 124, 125, 126) senkrecht zur Längsachse (LA) kleiner als die Breite der stirnseitigen Aufnahmeöffnungen der Paletten ist;
d) eine vertikale Höhe zumindest eines der Ladezinken (121, 122, 123, 124, 125, 126) senkrecht zur Längsachse (LA) kleiner als die Höhe der stirnseitigen Aufnahmeöffnungen und/oder der längsseitigen Aufnahmeöffnungen der Paletten ist;
e) zumindest einer der Ladezinken (121, 122, 123, 124, 125, 126) entlang der Längsachse (LA) teleskopierbar ist, und/oder
f) zumindest einer der Ladezinken (121, 122, 123, 124, 125, 126) eine Abstützvorrichtung (128) zum Abstützen des Ladezinkens (121, 122, 123, 124, 125, 126) auf einer Ladefläche eines der Depots umfasst.

3. Ladebrücke (100) nach Anspruch 1 oder 2,
**dadurch gekennzeichnet, dass**
das Verschiebesystem (140)
a) zumindest eine Querverschiebevorrichtung (150) zur Verschiebung zumindest eines der Ladezinken (121, 122, 123, 124, 125, 126) der Querachse (QA) relativ zu dem Hauptrahmen (110) umfasst und/oder
b) zumindest ein Anzeigemittel zur Anzeige einer Position zumindest eines der Ladezinken (121, 122, 123, 124, 125, 126) zumindest entlang der Längsachse (LA) umfasst.

4. Ladebrücke (100) nach einem der Ansprüche 1 bis 3,
**gekennzeichnet durch**
zumindest eine Hubvorrichtung (160) zur Höhenverstellung des Hauptrahmens (110) entlang einer vertikalen Hubachse (HA) relativ zu dem Fahrsystem (130), wobei
a) eine Höhe einer von den Ladezinken (121, 122, 123, 124, 125, 126) gebildeten Ladefläche (120) zumindest in einem Bereich von 0,1 m bis 1,8 m über einer Bodenebene (BE), auf der das Fahrsystem (130) aufliegt, einstellbar ist, und/oder
b) die Hubvorrichtung (160) eine Anzahl von vertikal ausgerichteten Hubträgern (161) umfasst.

5. Ladebrücke (100) nach einem der Ansprüche 1 bis 4,
**dadurch gekennzeichnet, dass**
die Fahrwerke (131)
a) zumindest eine motorisierte Drehvorrichtung (135) zur Drehung zumindest eines der Fahrwerke (131) um eine vertikale Drehachse relativ zu dem Hauptrahmen (110) umfassen;
b) zumindest eine Antriebsvorrichtung (137)zum Antrieb zumindest eines der Fahrwerke (131) umfassen;
c) zumindest eine Bremsvorrichtung (138) zum Abbremsen zumindest eines der Fahrwerke (131)umfassen;
d) gegeneinander austauschbar sind;
e) symmetrisch zu einer Mittel-Querschnittsebene der Ladebrücke (100) auf der Beladeseite (101) und der Entladeseite (102) angeordnet sind; und/oder
f) eine Gesamttragfähigkeit von zumindest 45 t aufweisen.

6. Ladebrücke (100) nach einem der Ansprüche 1 bis 5,
**gekennzeichnet durch**
zumindest eine Energieversorgung (170) zur Versorgung der Ladebrücke (100) mit Energie, wobei die Energieversorgung (170)
a) zumindest einen Energiespeicher (171) und/oder
b) zumindest eine Energiegewinnungsvorrichtung (172) umfasst.

7. Ladebrücke (100) nach einem der Ansprüche 1 bis 6,
**gekennzeichnet durch**
zumindest eine Steuervorrichtung (180) zur Steuerung der Ladebrücke (100), wobei die Steuervorrichtung (180)
a) zumindest eine speicherprogrammierbare Steuerung;
b) zumindest eine Bedienvorrichtung zur Bedienung der Steuervorrichtung (180) durch einen Bediener und/oder
c) zumindest eine Kommunikationsvorrichtung zur kommunikativen Verbindung der Steuervorrichtung (180) mit einem externen Steuergerät umfasst.

8. Ladebrücke (100) nach einem der Ansprüche 1 bis 7,
**gekennzeichnet durch**
a) zumindest eine Wetterschutzvorrichtung zum Schutz der Ladung vor Witterungseinflüssen;
b)zumindest eine Auslesevorrichtung zum Auslesen eines Identifikationsmerkmals der Ladung;
c) zumindest eine Fixiervorrichtung zur Fixierung der Ladung auf der Ladebrücke (100) zumindest während des Verfahrens der Ladebrücke (100);
d) zumindest ein Pufferelement an der Beladeseite (101) und/oder der Entladeseite (102)
e) zumindest eine Führungsvorrichtung (117) zur Führung der Ladung entlang der Längsachse (LA) und/oder
f) zumindest ein an der Beladeseite (101) und/oder an der Entladeseite (102) angeordnetes Überfahrblech (118).

9. Ladebrücke (100) nach einem der Ansprüche 1 bis 8,
**gekennzeichnet durch**
zumindest eine Sicherheitsvorrichtung, ausgewählt aus
a) zumindest einem Quetschschutzbalg an der Hubvorrichtung (160);
b) zumindest einer Beleuchtungsvorrichtung für die Ladebrücke (100), die Ladung und/oder eine Umgebung der Ladebrücke (100);
c) zumindest einem Sensorsystem, bevorzugt einem Kamerasystem, zur Überwachung der Ladebrücke (100), der Ladung und/oder einer Umgebung der Ladebrücke (100);
d) zumindest einem optischen und/oder akustischen Warnsignalgeber;
e) zumindest einem Not-Ausschalter für die Ladebrücke (100) und
f) zumindest einer Erdungsvorrichtung für die Ladebrücke (100).

10. Ladebrücke (100) nach einem der Ansprüche 1 bis 9,
**dadurch gekennzeichnet, dass**
die Ladebrücke (100) modular aufgebaut ist.

11. Ladebrücke (100) nach einem der Ansprüche 1 bis 10,
**dadurch gekennzeichnet, dass**
zumindest einer der Ladezinken (121, 122, 123, 124, 125, 126) ein Ladungsverschiebesystem (310) zur Verschiebung der Ladung auf dem Ladezinken (121, 122, 123, 124, 125, 126) entlang der Längsachse umfasst.

12. Verfahren zum Umladen einer Ladung zwischen zwei voneinander beabstandeten
Depots mit einer Ladebrücke (100) nach einem der Ansprüche 1 bis 11,
mit folgenden Schritten:
a) Heranfahren der Ladebrücke (100) an das erste der Depots;
b) Vorwärts-Ausfahren einer Anzahl von Ladezinken (121, 122, 123, 124, 125, 126) von der Ladebrücke (100) entlang einer Längsachse (LA) der Ladebrücke (100) auf einer Beladeseite (101) der Ladebrücke (100) auf das erste Depot zu;
c) Anheben der Ladezinken (121, 122, 123, 124, 125, 126) zum Aufnehmen einer Ladung;
d) Zurückziehen der Ladezinken (121, 122, 123, 124, 125, 126) in die Ladebrücke (100);
e) Weiterfahren der Ladebrücke (100) an das zweite der Depots;
f) Rückwärts-Ausfahren der Ladezinken (121, 122, 123, 124, 125, 126) von der Ladebrücke (100) entlang der Längsachse (LA) an einer der Beladeseite (101) gegenüberliegenden Entladeseite (102) der Ladebrücke (100) auf das zweite Depot zu; und
g) Absenken der Ladezinken (121, 122, 123, 124, 125, 126) zum Absetzen der Ladung.

13. Verfahren nach Anspruch 12,
**dadurch gekennzeichnet, dass**
die Ladung eine Mehrzahl von gegeneinander frei beweglichen Ladungseinheiten umfasst, wobei eine Mehrzahl von Ladungseinheiten senkrecht zu der Längsachse (LA) nebeneinander und/oder entlang der Längsachse (LA) hintereinander angeordnet ist.

14. Verfahren nach Anspruch 12 oder 13,
**gekennzeichnet durch**
ein horizontales Querverschieben und/oder ein Höhenverstellen zumindest eines der Ladezinken (121, 122, 123, 124, 125, 126) senkrecht zu der Längsachse (LA) vor dem Vorwärts-Ausfahren.

15. Verfahren nach einem der Ansprüche 12 bis 14,
**dadurch gekennzeichnet, dass**
eine Steuervorrichtung (180) der Ladebrücke (100) das Verfahren zumindest teilautomatisiert steuert.
